(19) Europäisches Patentamt
European Patent Office
Office européen des brevets

(11) Publication number: 0 382 454 B1

(12) # EUROPEAN PATENT SPECIFICATION

(45) Date of publication of patent specification: **08.06.94**

(51) Int. Cl.[5]: **C09D 5/00**, C09D 201/00, C09D 133/00, B05D 1/36

(21) Application number: **90301185.6**

(22) Date of filing: **05.02.90**

The file contains technical information submitted after the application was filed and not included in this specification

(54) **High solids coating composition, and coated articles and coating process using the same.**

(30) Priority: **09.02.89 JP 28682/89**
**01.11.89 JP 282857/89**
**30.11.89 JP 311553/89**

(43) Date of publication of application:
**16.08.90 Bulletin 90/33**

(45) Publication of the grant of the patent:
**08.06.94 Bulletin 94/23**

(84) Designated Contracting States:
**DE ES FR GB**

(56) References cited:
**EP-A- 0 137 256**

**DATABASE WPIL, No. 89-237802, DERWENT PUBLICATIONS LTD, London, GB;**

(73) Proprietor: **NIPPON OIL AND FATS COMPANY, LIMITED**
**10-1, Yuraku-cho 1-chome**
**Chiyoda-ku Tokyo(JP)**

(72) Inventor: **Shibato, Kishio**
**6-2 Katabuki,**
**Kanazawa-Ku**
**Yokohama City, Kanagawa Pref.(JP)**
Inventor: **Kawamura, Masataka**
**496-2 Nishitomi**
**Fujisawa City, Kanagawa Pref.(JP)**
Inventor: **Ohe, Osamu**
**17-3 Ebara 7-Chome,**
**Shinagawa-Ku**
**Tokyo(JP)**

(74) Representative: **Sheader, Brian N. et al**
**Eric Potter & Clarkson**
**St. Mary's Court**
**St. Mary's Gate**
**Nottingham NG1 1LE (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to high solids coating compositions applicable to steel plates or plastic materials, and coated articles and coating processes using the same, more particularly, high solids coating compositions of excellent appearance containing, in a specified amount, one kind or combination of at least two kinds of crosslinked polymer fine particles having very small particle diameters and having a hydroxyl value in a specified relation with a hydroxyl value of a polyol resin in film-forming resins, and coated articles and coating processes using the same.

Recently, the need for high solids coatings has been increasing in the field of automobile coatings, etc., aiming at decrease of exhaust amounts of organic solvents. Generally, it is well-known to use resins of low viscosity, curing agents or crosslinked polymer fine particles, in order to render the coatings high solids.

It is also known that crosslinked polymer fine particles are incorporated for the purpose of flow control of coating compositions, such as sag prevention at a vertical coating position, orientation control of metallic or inorganic flake-like pigments, for example, aluminum flake pigments, or the like (for example, Japanese Patent Applications Laid-open Nos. Sho-53-133,234, Sho-58-129,065, Sho-60-250,067 and Sho-61-42,579). and EP-A-137 256 Further, uniform orientation of aluminum flake pigments or the like can attain leveling of the film surface, and the sag prevention allows thick coatings to be formed, so that films of excellent appearance and high quality can be obtained.

In order to provide crosslinked polymer fine particles with a flow control function to attain an excellent appearance of films, it is necessary to highly perform control of an inter-particle-action that is considered to be based upon hydrogen bonding force, control of coagulation of particles due to difference in polarity between film forming resins and particles, or the like.

Meanwhile, low viscous polyols are generally employed for resins, while alkyletherified melamine resins or isocyanate compounds of low molecular weight are generally employed for curing agents.

In order to make polyol resins low viscous, it is generally required to decrease molecular weight and glass transition temperature (hereinafter abbreviated as "Tg") and, however, in the case where these are unlimitedly decreased, drawbacks will naturally arise in property of coating films after curing. Therefore, for example, in U.S. Patent specification Nos. 4,276,212, 4,291,137, etc., the performance control is achieved by defining molecular weight, Tg and hydroxyl group concentration of polyol resins, and further specifying the formulating amount of curing agents, i.e., alkyletherified melamine resins.

However, conventional crosslinked polymer fine particles (hereinafter, may be abbreviated simply as "particles") have drawbacks such that coarse particles having a particle diameter of several tens of μm are included, polarity control of the relation with film-forming resins is difficult due to ionic groups present on the surface of the particles, and the like, so that these particles have been still insufficient for reconciling the flow control function of coating films with excellent appearance.

Namely, if coarse particles are present in coating compositions, roughening of surfaces or deterioration of sharpness is caused. Particularly when they are present in base coats containing a flakelike pigment, such as 2-coat/1-bake metallic coating films, the coarse particles impede leveling of coating films, while when they are present in clear coats, they reduce gloss of coating films as microscopic roughness of the film surface is enlarged. Further, the object of the flow control effect is different between the cases where the particles are used in base coats and in clear coats, namely, the former aims at orientation control of metallic pigments and the latter aims at a sag prevention effect. Therefore, the hydrogen bonding force and coagulation must be controlled to well-balance between particles, according to each form of coating films. However, if ionic groups exist or conversely non-polar components of dispersion stabilizers, etc. exist on the particle surface, it is difficult to display a well-balanced flow control function as described above.

Furthermore, in the case where a noticeable decrease of viscosity occurs during baking like high solids coating compositions, a more increased flow control function will be required. In this case, if an increase of the flow control function is intended only by increasing the difference in polarity between film-forming resins and particles, there will be a limit in the increase, due to surface rougheness, gloss reduction, compatibility decrease, etc. and, moreover, the degree of freedom in respect of hydrogen bonding force between particles is small. Therefore, the control of the difference of polarity between particles turns out a very important factor for obtaining coating films of excellent appearance.

For example, according to the process proposed in Japanese Patent Application Laid-open No. Sho-53-133,234, it will be impossible to control the relation of polarity to film-forming resins, because non-polar components of dispersion stabilizers exist on the particle surface due to restrictions from the standpoint of synthetic process. Besides, since coarse particles having a particle diameter of 0.01~10 μm are contained, problems, such as surface rougheness, gloss reduction or the like, will be presented.

Alternatively, also according to the process proposed in Japanese Patent Application Laid-open No. Sho-58-129,065, problems,, such as surface roughness, gloss reduction will be presented as well, because ampho-ionic groups exist on the particle surface and because the polarity of particle-composing materials, per se, has not been remarked that means the polarity difference between film-forming resins and particles is not taken into consideration and, further, because coarse particles having a particle diameter of 0.02~40 μm are present.

Furthermore, according to the processes disclosed in Japanese Patent Applications Laid-open Nos. Sho-60-250,067 and Sho-61-42,579, though an improvement of the gloss of coating films is achieved by equalizing refractive indices of the particles and film-forming resins, yet the surface rougheness, gloss reduction, etc. will also be unavoidable, because amphoionic groups exist on the particle surface and because the polarity difference between film-forming resins and the particles is not taken into consideration and, further because coarse particles having a particle diameter of 0.01~10 μm are present.
solids coating compositions, or the like.

Alternatively, with respect to polyol resins, conventional high solids coating compositions have been mainly directed to a 1-coat/1-bake system. According to the processes disclosed in U.S. Patent specifications Nos. 4,276,212 and 4,291,137, when these processes are applied to a 2-coat/1-bake coating system which has recently been forming a main current particularly in the field of automobile coatings, there have been cases where adhesion becomes insufficient at the base coat/clear coat interface.

We, the inventors, as the result of assiduous studies of measures to obviate the above difficulties, have found that the flow control function of coating films can be reconciled to a high extent with an excellent appearance by decreasing the particle diameter of crosslinked polymer fine particles contained in coating compositions, allowing only hydroxyl groups to exist as a reactive functional group on the particle surface, and defining the hydroxyl value of the particles to be in a specified relation with the hydroxyl value of a polyol resin in the film-forming resins, and further in the case where at least two kinds of particles are used, by defining the hydroxyl value between respective kinds of particles also to be in a specified relation. Besides, in base coat/clear coat systems like a 2-coat/1-bake coating system, the adhesion at the base coat/clear coat interface can be increased by making the Tg of polyol resins to be used for the base coat lower than the Tg of polyol resins to be used for the clear coat. Thus, the inventors have accomplished the present invention.

Namely, the present invention is a high solids coating composition comprising 100 parts by weight of a resinous solid matter mixture comprising 30~90% by weight of a polyol resin and 10~70% by weight of a curing agent capable to react with hydroxyl groups and 1~100 parts by weight of crosslinked polymer fine particles of a 0.001~1.0 μm average particle diameter, the crosslinked polymer fine particles having only hydroxyl groups as a reactive functional group on the surface of the particles, wherein a difference in a hydroxyl value between said crosslinked polymer fine particles and said polyol resin is within the range defined by the inequality:

$$0 \leqq |(OHV)r - (OHV)g| \leqq 160,$$

wherein (OHV)g and (OHV)r are hydroxyl values of crosslinked polymer fine particles and polyol resin, respectively. The present invention also includes coated articles and coating processes using the above coating composition.

The crosslinked polymer fine particles to be used in the present invention are very fine particles having a maximum average particle diameter of not exceeding 1.0 μm and thus having a large surface area, so that there can be an effective interaction between particles which is considered to be based upon hydrogen bonding force. Further, since only the hydroxyl groups remain as a reactive functional group existing on the particle surface through the treatment described hereinafter, the polarity of the particle surface can be unequivocally expressed by a hydroxyl value as a parameter. Additionally, in the case where the relation of the hydroxyl value between the particle and the polyol resin is specified and at least two different kinds of particles are used, a particle coagulation effect by virtue of polarity difference between the different kinds of particles can be freely controlled also by specifying the relation of the hydroxyl value between the different kinds of particles. Accordingly, in the case of, for example, 2-coat/1-bake metallic coating films, a synergistic effect of interparticle hydrogen bonding force and particle coagulation owing to the polarity difference allows flake-like pigments such as aluminum flake or the like to be oriented uniformly in the base coat. Alternatively, by suppressing the particle coaguation owing to polarity difference to a small degree in the clear coat, microscopic roughness on the surface of the coating film can be eliminated and, moreover, an excellent sag prevention effect can be displayed by virtue of interaction by hydrogen bonds. Further, high solids coating compositions which require an augmented flow control function can possess an

increased particle coagulation effect in the range where face rougheness or gloss reduction of the coating films does not arise.

Accordingly, the high solids coating composition of the present invention can yield coating films of excellent appearance and high quality, since it has an excellent flow control function which enables to build a thick film coating and, moreover, does not give rise to face rougheness or microscopic roughness of the surface of the coating films.

As a polyol resin to be employed in the present invention, particularly preferable are acrylic resins in order for the present invention to be applied more effectively. However, other than those, for example, polyester resins, alkyd resins, epoxy resins, polyurethane resins, fluorocarbon resins, silicone resins, polycarbonate resins, polyether resins or the like, can also be employed alone or in combination as long as compatibility is exhibited.

In the case where acrylic resins are employed as a polyol resin in coating compositions of base coat/clear coat systems like a 2-coat/1-bake coating system, these acrylic resins are desired to have characteristics within the following ranges.

| Characteristics | Acrylic resin | |
|---|---|---|
| | Base coat | Clear coat |
| Glass transition temp. (Tg) | -10~20 °C | 20~50 °C |
| Weight-average molecular weight | 3,000~15,000 | 3,000~15,000 |
| Hydroxyl value | 50~250 | 50~250 |
| Acid value | 0~30 | 0~30 |

Here, an important point is that acrylic resins to be used for the base coat have a smaller Tg than that of acrylic resins to be used for the clear coat. The adhesion at the base coat/clear coat interface can be made to be excellent by maintaining the above relation. Therefore, when the acrylic resins for the base coat have a Tg of exceeding 20 °C, or when the acrylic resins for the clear coat have a Tg of less than 20 °C, there may be the case where the adhesion at the base coat/clear coat interface is lowered. When the acrylic resins for the base coat have a Tg of less than -10 °C, solvent resistance of cured coating films will decrease and, alternatively, when the acrylic resins for the clear coat have a Tg of exceeding 50 °C, bending resistance of cured coating films will decrease, so that the both cases are not preferred.

When the weight-average molecular weights of acrylic resins for the base coat and clear coat, respectively, are less than 3,000, weatherability of cured coating films will decrease and, alternatively, when they exceed 15,000, the high solid content will be hardly attained, so that the both cases are not preferred. When the hydroxyl value of the acrylic resins is less than 50, solvent resistance of cured coating films will decrease and, alternatively, when it exceeds 250, bending resistance of cured coating films will decrease, so that the both cases are not preferred. When the acid value of the acrylic resins exceeds 30, humidity resistance of cured coating films may decrease, so that it is not preferred.

Further, in the case where acrylic resins as a polyol resin are used in a base coat/clear coat system which is to be applied to an object of flexible plastic materials, such as polypropylene resins, polyurethane resins or the like, these acrylic resins are desired to have characteristics within the following ranges.

| Characteristics | Acrylic resin | |
|---|---|---|
| | Base coat | Clear coat |
| Glass transition temp. (Tg) | -60~-11 °C | -20~19 °C |
| Weight-average molecular weight | 4,000~40,000 | 4,000~40,000 |
| Hydroxyl value | 30~200 | 30~200 |
| Acid value | 0~30 | 0~30 |

Also in this case, it is important that the acrylic resins to be used for the base coat have a smaller Tg than the acrylic resins to be used for the clear coat. The adhesion at the base coat/clear coat interface can be made to be excellent by maintaining the above relation.

When the acrylic resins for the base coat have a Tg of exceeding -11 °C, or when the acrylic resins for the clear coat have a Tg of less than -20 °C, it is not preferred because the adhesion at the base coat/clear coat interface will be lowered. When the acrylic resins for the base coat have a Tg of less than -60 °C, solvent resistance of cured coating films will decrease and, alternatively, when the acrylic resins for the clear coat have a Tg of exceeding 19 °C, flexibility of cured coating films will decrease, so that the both cases are not preferred.

When the weight-average molecular weights of acrylic resins for the base coat and clear coat, respectively, are less than 4,000, weatherability of cured coating films will decrease and, alternatively, when they exceed 40,000, coating workability will be lowered, so that the both cases are not preferred. When the hydroxyl value of the acrylic resins is less than 30, solvent resistance of cured coating films will decrease and, alternatively, when it exceeds 200, flexibility of cured coating films will decrease, so that the both cases are not preferred. When the acid value of the acrylic resins exceeds 30, humidity resistance of cured coating films may decrease, so that it is not preferred.

The acrylic resins can be readily synthesized by usual radical solution polymerization of an $\alpha,\beta$-ethylenically unsaturated monomer containing a hydroxyl group, as an essential ingredient, and another $\alpha,\beta$-ethylenically unsaturated monomer in the range wherein the aforementioned hydroxyl value is satisfied. As the hydroxyl group-containing $\alpha,\beta$-ethylenically unsaturated monomer, mention may be made of, for example, 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, 4-hydroxybutyl (meth)acrylate, dipentaerythritol hexa(meth)acrylate, ring opening adducts of $\epsilon$-caprolactone (1~10 moles) with 2-hydroxyethyl (meth)-acrylate, ring opening adducts of $\epsilon$-caprolactone (1~10 moles) with 2-hydroxypropyl (meth)acrylate, or the like. Alternatively, as another $\alpha,\beta$-ethylenically unsaturated monomer, mention may be made of, for example, methyl (meth)acrylate, ethyl (meth)acrylate, n-propyl (meth)acrylate, isopropyl (meth)acrylate, n-butyl (meth)acrylate, isobutyl (meth)acrylate, sec-butyl (meth)acrylate, t-butyl (meth)acrylate, n-hexyl (meth)-acrylate, cyclohexyl (meth)acrylate, benzyl (meth)acrylate, 2-ethylhexyl (meth)acrylate, lauryl (meth)acrylate, stearyl (meth)acrylate, glycidyl (meth)acrylate, styrene, $\alpha$-methylstyrene, p-vinyltoluene, (meth)acrylonitrile, (meth)acrylic acid, (meth)acrylamide, vinyl acetate, vinyl propionate, vinyl butyrate, vinyl caproate, itaconic acid, crotonic acid, fumaric acid, maleic acid, butadiene, vinyl chloride, vinylidene chloride, dibutyl fumarate, maleic anhydride, allylglycidyl ether, allyl alcohol, or the like. These are used in order to bring the glass transition temperatures and acid values into the aforementioned ranges and to control the compatibility.

The high solids coating compositions of the present invention may contain a reactive diluent as shown below as a polyol resin ingredient.

(1) Polyether polyols:

Polyethylene glycols 200, 300, 400, 600, 1000, 1500, 1540, and 2000 (the number represents the number-average molecular weight of the polyethylene glycol), and Uniols D400, D700, D1000, D1200, D2000, TG400, TG1000 and TG2000 (all the trade names of polypropylene glycol manufactured by Nippon Oil & Fats Co., Ltd.);

(2) Caprolactone polyols:

Placcels 205, 208, 212, 220, 230, 303, 305 and 308 (all the trade names of polycaprolactone manufactured by Daicel Chemical Industries, Ltd.);

(3) Ester polyols:

Flexorez 188, 148 and XP-171-90 (the trade names of ester diol manufactured by King Industries Co.);

(4) Urethane polyols:

Flexorez UD-320 (the trade name of urethane diol manufactured by King Industries Co.) and Urethane diol UP-14-4 (the trade name of urethane diol manufactured by Auto Chemical Industries, Ltd.);

(5) Silicone polyols:

Condensates of, for example, KR-213, 217 or 218 (the trade names of methoxyl group-containing silicone compounds manufactured by Shin-Etsu Chemical Co., Ltd.) with a diol, such as ethylene glycol,

propylene glycol, 1,3-butane diol, 1,4-butane diol, 1,5-butane diol, 1,6-hexane diol, diethylene glycol, dipropylene glycol, neopentyl glycol, triethylene glycol, hydrogenated bisphenol A, bisphenol dihydroxypropyl ether, cyclohexane dimethanol or the like, at a methoxyl group/hydroxyl group mixing ratio of 1/2 (by mole); and the like.

As a curing agent capable to react with the hydroxyl group, mention may be made of, for example, aminomethylol resins such as melamine resins, urea resins, benzoguanamine resins, glycoluril resins or the like, polyisocyanate compounds, blocked isocyanate compounds and the like. In the high solids coating of the present invention, particularly preferable inter alia are melamine resins having a number-average molecular weight of not more than 1,000, alkyletherified with an alkyl group having not more than 8 carbon atoms, polyisocyanate compounds or blocked isocyanate compounds having a number-average molecular weight of not more than 1,000, or the like. In the case where the alkyl group of the alkyletherified melamine resins has more than 8 carbon atoms, water resistance of the resulting coating films will be deteriorated, so that it is not preferred. Alternatively, when the number-average molecular weight of the alkyletherified melamine resins, polyisocyanate compounds or blocked isocyanate compounds exceeds 1,000, it will become difficult to attain a high solid content.

As such an alkyletherified melamine resin commercially available, mention may be made of Cymels 300, 301, 303, 350, 1116, 1130 and 1168 (all the trade names, manufactured by American Cyanamid), Nikalacs MW-30, MW-22A, MX-40 and MX-45 (all the trade names, manufactured by Sanwa Chemical K.K.), Resimenes 730, 731, 735, 745, 746, 747, 753, 755 and 764 (All the trade names, manufactured by Monsanto), U-ban 120 (the trade name, manufactured by Mitsui Toatsu Chemicals Inc.) or the like.

Additionally, aromatic or aliphatic sulfonic acid compounds can be used as a curing agent. In respect of storage stability of coating compositions, appearance of coating films, or the like, aliphatic sulfonic acid compounds are more preferable. Alternatively, as a polyisocyanate compound, mention may be made of aromatic or aliphatic compounds having at least two isocyanate groups in a molecule, for example, polyisocyanate compounds such as 2,4-tolylene diisocyanate, 4,4'-diphenylmethane diisocyanate, 1,6-hexamethylene diisocyanate, cyclohexane 1,4-diisocyanate, isophorone diisocyanate or the like, and blocked isocyanate compounds comprising polyisocyanate compounds blocked with a blocking agent, for example, alcohols such as ethanol, hexanol or the like, compounds containing a phenolic hydroxyl group, such as phenol, cresol or the like, oximes such as acetoxime, methylethyl ketoxime or the like, lactams such as $\epsilon$-caprolactam, $\gamma$-caprolactam or the like, and the like.

The mixing ratio of the polyol resin and the curing agent to be used is within the range of a 30~90 weight % polyol resin to a 10~70 weight % curing agent. When the polyol resin is less than 30% by weight, chemical resistance of the resultant coating films will be deteriorated, while when it exceeds 90% by weight, water resistance of the resultant coating films will be deteriorated, so that the both cases are not preferred.

The crosslinked polymer fine particles to be used in the present invention have an average particle diameter of 0.001~1.0 µm and contain 100 parts by weight of resinous solid content mixture consisting of a 30~90 weight % polyol resin and a 10~70 weight % curing agent capable to react with hydroxyl groups and 1~100 parts in aggregate by weight of crosslinked polymer fine particles. However, in coating compositions for clear coats to be used for 2 coat system coatings or 3 coat system coatings, since even microscopic roughness of the surface is required to be leveled, it is preferred to contain 1~60 parts in aggregate by weight of the crosslinked polymer fine particles. In the case where the average particle diameter is less than 0.001 µm, the crosslinked polymer fine particles will become so instabilized that they agglomerate violently in coatings so that the appearance of the coating films cannot be improved, while in the case where it exceeds 1.0 µm, the roughness of the coating film surface will increase due to the large diameter of the particles themselves and deterioration of reactivity of the hydroxyl groups on the particle surface, so that the both cases are not preferred. If these particles are so controlled, preferably as a known technique teaches (in "ABS Resin" p.53, (1970), edited by The Society of Polymer Science, Japan, published by Maruzen Co.), that the difference in refractive index between the particles and coating film-forming resins may not exceed 0.005, it is more advantageous in obtaining coating films of excellent appearance and high quality. When the content of the crosslinked polymer fine particles is less than 1 part by weight, a flow controlling action of coating films becomes so insufficient that metallic marks in base coats or sagging in clear coats will be prone to occur, while when it exceeds 100 parts by weight, the flow controlling action will augment so excessively that the leveling property may be contrarily decreased.

When the relation of the hydroxyl value (OHV)g of the crosslinked polymer fine particles with the hydroxyl value (OHV)r of the polyol resins satisfies the inequality:

$$0 \leqq |(OHV)r - (OHV)g| \leqq 160,$$

an excellent flow controlling action can be displayed. However, in high solids coating compositions for clear coats to be used for 2-coat system coatings or 3-coat system coatings, since even microscopic roughness of the surface due to particle agglomeration is required to be leveled, it is preferred that the relation of the hydroxyl value (OHV)g of the crosslinked polymer fine particles with the hydroxyl value (OHV)r of the polyol resins satisfies the inequality:

$$0 \leqq |(OHV)r - (OHV)g| \leqq 100.$$

When the polyol resin is a mixture of a plurality of resins or contains the aforementioned reactive diluents, the hydroxyl value (OHV)r of the polyol resin may be an arithmetic mean value in weight ratio of all polyol ingredients. Alternatively, when the particles are obtained by a usual emulsion polymerization method, the hydroxyl value (OHV)g of the crosslinked polymer fine particles represents the hydroxyl value of the whole portion of the particles, while when they are obtained by core/shell type emulsion polymerization, the hydroxyl value represents that of only the shell portions. Particularly, in the case where the particles obtained by core/shell type emulsion polymerization or the polyol resin contains reactive diluents, even a system wherein (OHV)g is higher than (OHV)r can yield coating films of excellent appearance. When the difference of hydroxyl values, |(OHV)r-(OHV)g|, exceeds 160, particle coagulation based upon polarity difference will augment so excessively that face roughness in base coats or microscopic roughness in clear coats is prone to occur, so that it is not preferred.

When at least two different kinds of crosslinked polymer fine particles are used, a more highly balanced flow controlling action may be displayed. In this case, the relation of the hydroxyl value (OHV)g of each kind of particles with the hydroxyl value (OHV)r of the polyol resin should satisfy the inequality:

$$0 \leqq |(OHV)r-(OHV)g| \leqq 160,$$

and, further, a difference x between the maximum value and minimum value of (OHV)g in all the particles should satisfy the inequality:

$$0 < x \leqq 120.$$

However, in high solids coating compositions for clear coats to be used for 2-coat system coatings or 3-coat system coatings, since even microscopic roughness of the surface due to particle agglomeration is required to be leveled, it is preferred that the difference x satisfies the inequality:

$$10 \leqq x \leqq 60.$$

When the difference x exceeds 120, particle coagulation based upon polarity difference augments so excessively that face roughness in base coats or microscopic roughness in clear coats will be prone to occur, so that it is not preferred.

Alternatively, when at least two different kinds of crosslinked polymer fine particles are used, the content of each kind of crosslinked polymer fine particles is preferred to be at least 10% by weight based on the total amount of the crosslinked polymer fine particles. Any crosslinked polymer fine particles present in an amount of less than 10% by weight of the total particles may not contribute to the highly balanced flow control function, so that such particles are not preferred.

The crosslinked polymer fine particles of the present invention can be synthesized by emulsion polymerization or core/shell type emulsion polymerization of the ingredients:

(a) an $\alpha,\beta$-ethylenically unsaturated monomer containing a hydroxyl group,

(b) a polyfunctional $\alpha,\beta$-ethylenically unsaturated monomer, and

(c) an $\alpha,\beta$-ethylenically unsaturated monomer other than the above (a) and (b),

using a water-soluble polymerization initiator, in a soap-free system or in the presence of a surfactant containing an ester group. The ingredient (a) among the others is used for controlling the hydroxyl value (OHV)g of the crosslinked polymer fine particles, in order to satisfy the abovedescribed relation with the hydroxyl value (OHV)r of the polyol resins. As such an ingredient (a), empolyable are, for example, 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, 4-hydroxybutyl (meth)acrylate, dipentaerythritol hexa-(meth)acrylate, ring opening adducts of $\epsilon$-caprolactone (1~10 moles) with 2-hydroxyethyl (meth)acrylate, ring opening adducts of $\epsilon$-caprolactone (1~10 moles) with 2-hydroxypropyl (meth)acrylate (for example, the trade names, Placcels FM1, FM2, FM3, FM7 and FM10, manufactured by Daicel Chemical Industries, Ltd.),

ring opening adducts of 1~10 moles of other lactones, such as β-propiolactone, β-butyrolactone, γ-butyrolactone, pivalolactone, γ-valerolactone, δ-valerolactone or the like, with 2-hydroxyethyl (meth)acrylate or 2-hyroxypropyl (meth)acrylate, ring opening adducts of 2~10 mols of ethylene oxide and/or propylene oxide with (meth)acrylic acid (for example, the trade names, Blemmers PP500, PP800, PP1000, PE90, PE200, PE350 and PEP350B, manufactured by Nippon Oil & Fats Co., Ltd.), the monomer shown below:

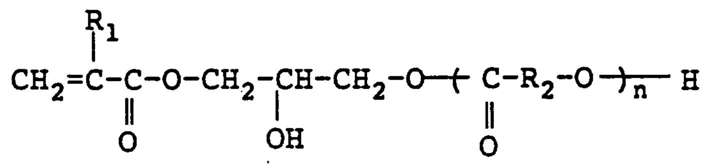

wherein $R_1$ represents hydrogen atom or methyl group, $R_2$ represents an alkylene group having 1~17 carbon atoms, and n is an integer of 1~10,
or the like. These may be used alone or in combination.

Alternatively, the ingredient (b) is used for forming three dimensional crosslinking in the interior of the polymer fine particles to maintain a stabilized particle shape without dissolving in coatings. This ingredient is used generally in an amount ranging 0.5~80% by weight based on the total amount of ingredients (a), (b) and (c). As such an ingredient (b), mention may be made of, for example, divinyl benzene, diallyl phthalate, diallyl terephthalate, ethylene glycol di(meth)acrylate, diethylene glycol di(meth)acrylate, triethylene glycol di(meth)acrylate, polyethylene glycol di(meth)acrylate, 1,4-butanediol di(meth)acrylate, 1,3-butylene glycol di(meth)acrylate, 1,6-hexanediol di(meth)acrylate, neopentyl glycol di(meth)acrylate, 2-hydroxy-1,3-di(meth)-acryloxy propane, 2,2-bis[4-((meth)-acryloxyethoxy)phenyl] propane, trimethylol propane tri(meth)acrylate, tetramethylol methane tri(meth)acrylate, pentaerythritol tri(meth)acrylate, dipentaerythritol tri(meth)acrylate, pentaerythritol tetra(meth)acrylate, dipentaerythritol tetra(meth)acrylate, dipentaerythritol penta(meth)-acrylate, dipentaerythritol hexa(meth)acrylate, tetramethylol methane tetra(meth)acrylate, epoxy prepolymers, urethane (meth)acrylates or the like. These may be used alone or in combination.

When the ingredient (b) is contained in an amount of less than 0.5% by weight in the fine particles, the crosslinking density in the particles is so low that the particles will be swelled by a solvent and the viscosity will increase when they are used in non-aqueous coatings. Alternatively, when the content exceeds 80% by weight, the crosslinking agent unreacted within the particles will react between particles to induce agglomeration of particles, so that it is not preferred.

Further, the α,β-ethylenically unsaturated monomers of the ingredient (c) are monomers containing no reactive functional groups but an unsaturated group. These are, for example, methyl (meth)acrylate, ethyl (meth)acrylate, n-propyl (meth)acrylate, isopropyl (meth)acrylate, n-butyl (meth)acrylate, isobutyl (meth)-acrylate, sec-butyl (meth)acrylate, t-butyl (meth)acrylate, n-hexyl (meth)acrylate, cyclohexyl (meth)acrylate, benzyl (meth)acrylate, 2-ethylhexyl (meth)acrylate, lauryl (meth)acrylate, stearyl (meth)acrylate, styrene, α-methyl styrene, p-vinyl toluene, (meth)acrylonitrile, vinyl acetate, vinyl propionate, vinyl butyrate, vinyl caproate, vinyl 2-ethylhexanoate, vinyl laurate, vinyl stearate, vinyl chloride, vinylidene chloride, dibutyl fumarate, or the like. These are used alone or in combination, for the purpose of controlling compatibility, glass transition temperature, acid value or the like of the crosslinked polymer fine particles according to coating films they are used for.

Alternatively, as an anionic surface active agent in the ester group-containing surfactants to be used in emulsion polymerization, mention may be made of, for example, alkyl sulfates, monoalkyl sulfosuccinates, dialkyl sulfosuccinates, alkylether sulfates, polyoxyethylene alkylphenylether sulfates, alkyl phosphates, alkylether phosphates, sodium salts, potassium salts or amine salts of sulfonic acid compounds represented by the following general formula:

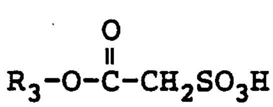

wherein $R_3$ is an alkyl group having 12~18 carbon atoms. These may be used alone or in combination. Additionally, the alkyl sulfates include, for example, sodium lauryl sulfate, sodium 2-ethylhexyl sulfate; the monoalkyl sulfosuccinates include, for example, sodium hexyl sulfosuccinate; the dialkyl sulfosuccinates include, for example, sodium dihexyl sulfosuccinate, sodium di-2-ethylhexyl sulfosuccinate; the alkylether

sulfates include, for example, sodium polyoxyethylene laurylether sulfate; the polyoxyethylene alkylphenylether sulfates include, for example, sodium polyoxyethylene octylphenylether sulfate; the alkyl phosphates include, for example, potassium lauryl phosphate; and the alkylether phosphates include, for example, potassium polyoxyethylene lauryl phosphate or the like. These may be used alone or in combination.

Further, as a cationic surfactant, mention may be made of, for example, the compounds represented by the following general formula:

$$R_4-O-\overset{\overset{\displaystyle O}{\|}}{C}-CH_2N^{\oplus}(CH_3)_3Cl^{\ominus}$$

wherein $R_4$ is an alkyl group having 12~18 carbon atoms. When the emulsion polymerisation is conducted, it is preferred that the above surfactants are used in an amount yielding a concentration in water of 7% or less, by weight. In the case where the concentration of the surfactants exceeds 7% by weight, ionic compounds produced by hydrolysis of the surfactants are liable to remain in the polymer non-aqueous dispersion to deteriorate water resistance of coating films, so that it is not preferred.

By such an emulsion polymerization, crosslinked polymer fine particles having average particle diameter of 0.001~1.0 μm can be obtained.

Alternatively, as a water soluble polymerization initiator to be used in the emulsion polymerization or core/shell type emulsion polymerization, particularly preferable are, for example, persulfates, such as potassium persulfate, sodium persulfate, ammonium persulfate or the like. These may be used alone or in combination. Needless to say, in this case, ferrous salts, acid sodium sulfite, N,N-dimethyl aniline or the like can be used in combination with the persulfates, as a redox polymerization initiating system.

The water-soluble polymerization initiators are used, in the case of a soap-free system, in an amount of 1~10% by weight based on the total $\alpha,\beta$-ethylenically unsaturated monomers, or in the presence of surfactants, in an amount ranging 0.1~2% by weight. In the case of soap-free system, if the water-soluble polymerization initiators are used in an amount of less than 1% by weight, the polymer particles will agglomerate due to poor emulsification, while in excess of 10% by weight, the polymer particles will also agglomerate by saltingout, so that the both cases are not preferred. In the presence of the surfactant, if they are used in an amount of less than 0.1% by weight, the polymerization conversion will be so insufficient that the polymer fine particles are hardly produced, while if in excess of 2% by weight, the polymer fine particles will agglomerate by salting-out, so that the both cases are not preferred.

The crosslinked polymer fine particles obtained as above are subjected to the subsequent process wherein fragments of the ester group-containing surfactants and of the water-soluble polymerization initiators (hereinafter may be referred to as "ionic groups") supported on the surfaces of the particles are decomposed and removed, whereby only hydroxyl groups are allowed to remain as a reactive functional group present on the particle surface. Through such a process, the particles are obtained as a non-aqueous dispersion.

Namely, on the outset, an organic solvent that causes neither dissolution nor agglomeration of particles nor water separation is added to the crosslinked polymer fine particle aqueous dispersion produced by the emulsion polymerization. Such an organic solvent desirably contains 20~100% by weight of an amphipathic organic solvent that is compatible with the hydroxyl group on particle surfaces. As such an amphipathic organic solvent, suitable are alcohols, ketones, ethers, glycol ethers, or the like, which can form hydrogen-bonds with the hydroxyl groups on the particle surfaces to prevent interparticle agglomeration. If the amphipathic organic solvent is present in an amount of less than 20% by weight, the interparticle agglomeration and water separation will occur, so that it is not preferred.

As such an amphipathic organic solvent compatible with a hydroxyl group on particle surfaces, mention may be made of, for example, alcohols such as 2-ehtyl-1-butyl alcohol, 3-heptyl alcohol, 1-octyl alcohol, 2-octyl alcohol, 2-ethylhexyl alcohol, 1-nonyl alcohol, 3,5,5-trimethyl-1-hexyl alcohol, 1-decyl alcohol, 1-undecyl alcohol, 1-dodecyl alcohol, n-butyl alcohol, n-pentyl alcohol, n-hexyl alcohol, secondary butyl alcohol, isobutyl alcohol, 2-pentyl alcohol, 4-methyl-2-pentyl alcohol, 3-pentyl alcohol, 2-methyl-1-butyl alcohol, or the like; ketones such as methyl-n-propyl ketone, methyl-isopropyl ketone, diethyl ketone, methyl-n-butyl ketone, methyl-isobutyl ketone, methyl-n-pentyl ketone, di-n-propyl ketone, di-isobutyl ketone, ethyl-n-butyl ketone, methylethyl ketone, or the like; ethers such as diethyl ether, dipropyl ether, diisopropyl ether, dibutyl ether, dihexyl ether, dioxane, tetrahydrofuran, tetrahydropyran, 1,2-diethoxy

ethane, or the like; and glycol ethers such as 2-isopentyloxy ethanol, 2-hexyloxy ethanol, 2-phenoxy ethanol, or the like. These may be used alone or in combination.

Alternatively, organic solvents other than the above, namely, non-amphipathic organic solvents incompatible with the hydroxyl groups on particle surfaces, are used in an amount of 0~80% by weight for the purpose of facilitating a process for removing residual water after conversion of particles to a non-aqueous system. Those are admixed to the aforementioned organic solvents until the solubility of water at 20°C becomes preferably 5% or less, by weight. As such an organic solvent, mention may be made of, for example, aliphatic solvents such as n-pentane, n-hexane, n-heptane, cyclohexane, methyl cyclohexane, ethyl cyclohexane, or the like; aromatic solvents such as benzene, toluene, xylene, ethyl benzene, or the like; and esteric solvents such as ethyl acetate, n-propyl acetate, isopropyl acetate, n-butyl acetate, isobutyl acetate, secondary butyl acetate, or the like. These may be used alone or in combination and are not limited to the above in the present invention.

Further, the organic solvent is admixed to the aqueous dispersions of the crosslinked polymer fine particles in an amount ranging 5~90%, preferably 10~70%, by weight, based on the total amount of the crosslinked polymer fine particles aqueous dispersion and the organic solvent. If the organic solvent is less than 5% by weight, the crosslinked polymer fine particles will agglomerate and the viscosity of the system will increase so high that stirring will become hardly performed efficiently, so that it is not preferred. Alternatively, if it is admixed in excess of 90% by weight, the system will separate into a water layer and an organic layer, whereby the hydrolysis reaction on the polymer particle surfaces will not proceed sufficiently in the subsequent process and thus reactive functional groups other than the hydroxyl group will present on the particle surfaces, so that it is not preferred.

After addition of the organic solvent to the crosslinked polymer fine particles aqueous dispersion, a hydrolysis process is then conducted. The hydrolysis reaction aims to scission-remove ionic groups from particle surfaces to leave only hydroxyl groups as a reactive functional group present on the particle surfaces and then transfer completely these particles to the organic layer without agglomerating. The hydrolysis reaction is performed at a temperature of not exceeding 95°C, preferably, 70~95°C, in the presence of a basic compound catalyst when an anionic surfactant is used, an acidic compound catalyst when a cationic surfactant is used, or a basic or acidic compound catalyst in the case of a soap-free emulsion polymerization. If the reaction temperature exceeds 95°C, not only the ionic group but also other ester group portions on particle surfaces will be hydrolyzed to form carboxyl groups whereby reactive functional groups other than the hydroxyl groups will be formed on the particle surfaces, so that it is not preferred. Alternatively, if the reaction temperature is less than 70°C, it will take a long time to complete the hydrolysis reaction, so that it is not preferred.

Further, the basic compound catalysts or acidic compound catalysts are added desirably in an amount of 1~3 times the stoichiometric amount of ester groups to be hydrolysed. If the amount is less than the stoichiometric, the degree of hydrolysis will become so low that ionic groups will be liable to remain on the particle surfaces, so that it is not preferred. Alternatively, if the amount exceeds 3 times, hydrolysis of (meth)acrylates constituting the particles will commence, producing carboxyl groups on the particles surfaces, so that it is not preferred. The "stoichiometric amount of the ester groups to be hydrolysed" is to mean the aggregate of double amount of persulfates and total amount of ester groups of a surfactant. As a basic compound catalyst, mention may be made of, for example, sodium hydroxide, potassium hydroxide, lithium hydroxide, tetramethyl ammonium hydroxide, tetraethyl ammonium hydroxide or the like, and as an acidic compound catalyst, for example, sulfuric acid, hydrochloric acid, p-toluene sulfonic acid, methane sulfonic acid, benzene sulfonic acid or the like. A progress degree of hydrolysis can be followed by neutralization titration, etc. of consumption of the added basic compound catalyst or acidic compound catalyst and the endpoint of titration can be found easily.

After completion of the hydrolysis reaction, a neutralization reaction is conducted according to the conventional method, with an acidic compound same as the aforementioned acidic compound catalysts in the case of a system wherein the basic compound catalyst has been used, and with a basic compound same as the aforementioned basic compound catalysts in the case where the acidic compound catalyst has been used, and thereafter 10~200 parts by weight, as resinous solid matter, of a dispersion stabilizing resin are added to 100 parts by weight of the crosslinked polymer fine particles to stabilize the particle dispersion. The dispersion stabilizing resin to be used here is preferred to have compatibility with binders of coating films. As such a dispersion stabilizing resin, any one or mixtures of acrylic resins, alkyd resins and polyester resins having essentially a hydroxyl group, or any one or mixtures of amino resins such as melamine resins, benzoguanamine resins, urea resins, glycoluril resins and the like, are preferred.

Additionally, if the dispersion stabilizing resin is used in an amount as resinous solid matter of less than 10 parts per 100 parts by weight of the particles, there may be, the case where the dispersion stability of

the particles decreases so much that the particles coalesce at gas-liquid interfaces, etc. in a reactor. Alternatively, if in excess of 200 parts by weight, efficiency of separation into two layers: an organic layer containing the polymer particles and a water layer, will be lowered, so that it is not preferred.

After addition of the dispersion stabilizing resin, an amine salt of an organic acid is further added to the system and then stirring is stopped, followed by leaving the system to stand to separate into two layers; a resinous solution layer (organic layer) containing the particles and a water layer containing ionic substances. The ionic substances herein referred to include hydrolysis reaction products of surfactants and water-soluble polymerization initiator fragments; basic compound catalysts and acidic compound catalysts added in the hydrolysis and neutralization reactions; or salts produced in the neutralization reaction. It is preferred to warm up the system with the intention of furtherance of water separation, and by maintaining the temperature of the system in the range between 50°C and 80°C, a water separation efficiency can be raised.

The organic acids to be used in the amine salt of organic acid to be added here include, for example, carboxylic acids such as formic acid, acetic acid, propionic acid, oxalic acid, malonic acid or the like; sulfonic acids such as methane sulfonic acid, ethane sulfonic acid or the like; and organophosphoric acids such as monomethyl phosphoric acid, monoethyl phosphoric acid, dimethyl phosphoric acid, diethyl phosphoric acid or the like. Alternatively, as the amines, those having a boiling point of 150°C or less are particularly preferred, and mention may be made of, for example, primary amines such as monoethylamine, propylamine, isopropylamine, n-butylamine, isobutylamine, secondary butylamine, t-butylamine, pentylamine or the like; secondary amines such as dimethylamine, diethylamine, dipropylamine, diisopropylamine, diisobutylamine, dipentylamine or the like; and tertiary amines such as trimethylamine, triethylamine, tripropylamine, tributylamine, pyridine or the like. However, the organic acids and amines to be employed in the present invention are not specifically limited to the above. If amines having a boiling point of higher than 150°C are used, there may be the case where the amines remain in non-aqueous dispersions of crosslinked polymer fine particles to deteriorate properties of coating films, such as water resistance, etc.

The amine salts of organic acid consisting of a combination of the above organic acid and amine can be readily manufactured by mixing predetermined amounts of the organic acid and amine in the presence of water at normal temperatures. Further, it is appropriate that the amine salts of organic acid are added in an amount ranging 0.1~10%, preferably 1~5%, by weight, based on the water existing in the system. If it is less than 0.1% by weight, the efficiency of separation into a water layer and an organic layer will be lowered, while if in excess of 10% by weight, the amine salts of organic acid are liable to remain in polymer non-aqueous dispersions, thereby deteriorating properties of coating films, such as water resistance, etc. so that the both cases are not preferred.

Then, after removing the water layer, ionic substances remaining in the organic layer are washed off with water and then after the above amine salt of organic acid is added, the organic layer is left to stand to separate and remove the washing water. The water-washing process is repeated until pH of the separating and removing water layer reaches 5~8 and ionic substances remaining in the organic layer decrease to 50 ppm or less. If the pH of the water layer to be separated and removed is lower than 5 or exceeds 8, or the ionic substances remaining in the organic layer exceed 50 ppm, the properties of coating films, such as water resistance or the like, will be deteriorated, so that the both cases are not preferred.

Further, if the residual water is reduced to 5% by weight in the organic layer after washing with water, removal of the residual water in the subsequent process can be facilitated.

The residual water in the organic layer can be removed by the following methods:

(a) distillation of the water under vacuum,
(b) removal by decomposition through reactions with compounds,
(c) water-absorbing treatment with a water-absorbent, or
(d) removal of water by azeotropy or spray drying.

The method (a) is a method wherein only water is distilled out at 50~100°C under a reduced pressure of less than 760 mmHg, as the system is not forming an azeotropic mixture with water. The method (b) is a method wherein an orthocarboxylic acid ester, such as methyl orthoformate, ethyl orthoformate, methyl orthoacetate, ethyl orthoacetate or the like, or diketene, formamide, dicyclohexyl carbodiimide or the like is added and the residual water is decomposed by reacting therewith at 30~90°C. If the reaction temperature is lower than 30°C, the water decomposition will require a long time, while if higher than 90°C, moisture will condense at vacant spaces in the reactor, rather resulting in insufficient water-removal so that the both cases are not preferred. In this water removing method, low boiling point solvents are by-produced as decomposition products, such as methyl alcohol, ethyl alcohol, methyl formate, ethyl formate, methyl acetate, ethyl acetate or the like, when the orthocarboxylic acid esters are used, or such as acetone or the

like, when the diketene is used. Therefore, it is preferred that these low boiling point solvents are distilled off under vacuum, after the water decomposition reaction, for the purpose of preventing popping of coating films. Further, since when the formamide is used, ammonium formate is by-produced, or when dicyclohexyl carbodiimide is used, dicyclohexyl urea is by-produced, such a decomposition product is required to be separated by filtration after the water decomposition reaction. The method (c) is a method wherein the organic layer is passed through a column filled with a polymer water absorbent, such as Sumika Gel S-50, SP-520, N-100, NP-1020, F-03, F-51 or F-75 (all the trade names, manufactured by Sumitomo Chemical Co., Ltd.), Aquakeep 4S or 10HS (both the trade names, manufactured by Seitetsu Kagaku Co., Ltd.) or molecular sieves, or a method wherein any one or a mixture of the above polymer water absorbents, molecular sieves or dehydrates of inorganic salts such as sodium sulfate, calcium chloride, calcium oxide or the like is admixed with the organic layer and, after stirring, separated by filtration. The method (d) is a water removing method that has been generally used to obtain dry particles after emulsion polymerization, as is for example referred to in British Patent Specification No. 967,051, page 5, wherein organic solvents capable to form an azeotropic mixture with water are added and water is azeotropically distilled off at 50~100 °C. Alternatively, it is a method wherein the organic layer is sprayed at 20~100 °C from a nozzle to vaporize water with organic solvent and then drying residue is dispersed again in the organic solvent.

In order to formulate the high solids coating composition of the present invention, those ingredients are mixed together according to a usual admixing process by means of a conventional dispersing apparatus that is generally used in the manufacture of coating compositions, such as ball mills, sand mills, attritors or the like. Then, if required, coloring agents such as pigments, dyes, glass flake, aluminum flake, mica flake or the like, and also other additives usually employed in coating compositions, such as pigment dispersants, viscosity modifiers, leveling agents, curing catalysts, anti-gelling agents, UV absorbers, radical scavengers, or the like, may be added. The coating compositions obtained according to the above process are applied, with a 1-coat/1-bake, 2-coat/2-bake, 2-coat/1-bake, 3-coat/3-bake, 3-coat/2-bake or the like system, by a usual coating method, such as air spray coating, airless spray coating, electrostatic coating, dip coating or the like, on usual objects to be coated, for example, inorganic materials such as metals or the like, or organic materials such as plastics or the like, and then dried at 60~180 °C for 20~60 minutes, whereby excellent coating films are obtained.

By the base coat according to the present invention referred to herein is meant to coat a high solids coating composition which comprises a colorant as a base, such as pigments, dyes, glass flake, aluminum flake, mica flake or the like. By the clear coat is meant to coat a high solids coating composition which is transparent or colored with a small amount of the above colorant.

As explained above, the high solids coating compositions of the present invention contain crosslinked polymer fine particles with an extremely small particle diameter, having only hydroxyl groups as a reactive functional group present on the surface of the particles. Further, the hydroxyl value of the particles is defined to have a specified relation with a polyol resin in the film forming resins and, furthermore, when at least two different kinds of the particles are used, the hydroxyl values between different kinds of particles are also defined in a specified relation. Accordingly, the high solids coating compositions of the present invention can display a highly balanced flow control function as well as an excellent sag prevention effect and thus allow high build coatings to be formed. Therefore, according to the coated products and coating process using the coating composition of the present invention, leveled, brilliant coating films of excellent appearance and high quality, can be obtained.

Further, in the base coat/clear coat system, coating films excellent in adhesion at the base coat/clear coat interface can be obtained by specifying each of the glass transition temperatures of polyol resins to be used for the base coat and clear coat.

The present invention will be further explained in more detail by way of example and comparative example hereinafter. In examples, parts and percentages are by weight, unless otherwise specified.

Manufacture of acrylic resins

Manufacturing Examples I~VI

A four-necked flask equipped with a reflux condenser, a stirrer, a dropping funnel and a thermometer was charged with 61.8 parts of methylamyl ketone and heated up to 150 °C while stirring. Then, 100 parts of a mixture of the monomer components and the polymerization initiator shown in Table 1 were dropped at a constant rate taking 2 hours, under a constant temperature of 150 °C. After the dropping had been completed, the temperature of 150 °C was further maintained for 2 hours before the reaction was finished and the acrylic resin solutions I~VI having characteristics as shown in Table 1 were obtained.

Table 1

| Acrylic resin | | I | II | III | IV | V | VI |
|---|---|---|---|---|---|---|---|
| Added component (%) | Methyl methacrylate | 19.4 | 19.4 | 19.4 | 24.3 | 24.3 | 24.3 |
| | n-butyl methacrylate | 43.4 | 30.7 | 17.7 | 36.6 | 23.8 | 10.9 |
| | 2-ethylhexyl acrylate | 13.7 | 16.5 | 19.5 | 15.6 | 18.5 | 21.4 |
| | 2-hydroxypropyl methacrylate | 20.0 | 29.9 | 39.9 | 20.0 | 29.9 | 39.9 |
| | Acrylic acid | 0.6 | 0.6 | 0.6 | 0.6 | 0.6 | 0.6 |
| | t-butyl peroxybenzoate | 2.9 | 2.9 | 2.9 | 2.9 | 2.9 | 2.9 |
| Hydroxyl value | | 80 | 120 | 160 | 80 | 120 | 160 |
| Non-volatile (%) 1) | | 60 | 60 | 60 | 60 | 60 | 60 |
| Wt.-average molecular weight 2) | | 7100 | 6700 | 6500 | 7200 | 6800 | 7300 |

Note 1) In accordance with JIS K 5400 8.2, non-volatile.
Note 2) In accordance with gel permeation chromatography in reducing to styrene.

Manufacture of polyester resins

Manufacturing Example VII and VIII

A four-necked flask equipped with a water quantification receiver provided with a reflux condenser, a stirrer and a nitrogen gas feed pipe, was charged with 100 parts of the monomer composition shown in Table 2 and heated up to 230 °C while stirring, taking 4 hours, to effect dehydration condensation. The dehydration condensation was further carried out keeping the temperature of 230 °C for 3 hours. Then, 5.0 parts of xylene was added into the flask to change the reaction to a condensation reaction in the presence of solvent, which was continued. When the acid value of the resin decreased to 5, the reaction was stopped and the flask was cooled down. After cooling, xylene was added in an amount of 55.9 parts in Manufacturing Example VII and 56.5 parts in Manufacturing Example VIII and stirred to homogenize. Thus, polyester resin solution VII and VIII each having the characteristics shown in Table 2 were obtained.

Table 2

| Polyester resins | | VII | VIII |
|---|---|---|---|
| Monomer composition | Soybean oil fatty acid | 10.0 | 10.0 |
| | Phthalic anhydride | 30.0 | 30.0 |
| | Adipic acid | 18.6 | 14.9 |
| | Neopentyl glycol | 34.4 | 24.3 |
| | Trimethylol propane | 7.0 | 20.8 |
| Hydroxyl value | | 80 | 180 |
| Non-volatile (%) 1) | | 60 | 60 |
| Viscosity (25 °C) 2) | | S-T | V |

Note 1) As aforecited in Table 1, Note 1).
Note 2) In accordance with JIS K 5400 4.2.2, bubble viscometer.

Manufacture of Crosslinked Polymer Fine Particle

Manufacturing Example AA

(a) Manufacture of crosslinked polymer fine particle aqueous dispersion

| Surfactant aqueous solution | |
|---|---|
| Deionized water | 380.0 parts |
| Rapisol B90 1) | 5.5 " |

Note 1) Rapisol B90: the trade name of sodium di2-ethylhexyl sulfosuccinate, manufactured by Nippon Oil & Fats Co., Ltd.; active ingredient, 90%.

| Polymerization initiator aqueous solution-1 | |
|---|---|
| Deionized water | 10.0 parts |
| Sodium persulfate | 0.3 " |

| $\alpha,\beta$-ethylenically unsaturated monomer mixture | |
|---|---|
| 2-Hydroxyethyl methacrylate | 2.3 parts |
| 1,4-Butanediol dimethacrylate | 50.0 " |
| Styrene | 10.0 " |
| n-Butyl methacrylate | 37.7 " |

| Polymerization initiator aqueous solution-2 | |
|---|---|
| Deionized water | 10.0 parts |
| Sodium persulfate | 0.3 " |

A flask equipped with a stirrer, a reflux condenser, a couple of dropping funnels, a nitrogen feeding tube and a thermometer, was charged with the surfactant aqueous solution and after raising the temperature to 80°C under nitrogen stream, the polymerization initiator aqueous solution-1 was added. After the temperature had been resumed 80°C, the $\alpha,\beta$-ethylenically unsaturated monomer mixture was added dropwise taking 3 hours, as the temperature of the mixture in the flask was kept at 80±2°C. From 1 hour after the commencement of the addition and parallel with the addition of this monomer mixture, the polymerization initiator aqueous solution-2 was also added dropwise taking 2 hours. After completion of the addition of the $\alpha,\beta$-ethylenically unsaturated monomers and polymerization initiator aqueous solution-2, polymerization was further performed at 80°C for 2 hours and a crosslinked polymer fine particle aqueous dispersion AA1 having characteristics as shown in Table 3 was obtained.

(b) Manufacture of crosslinked polymer fine particle non-aqueous dispersion.

Five hundred parts of the crosslinked polymer fine particle aqueous dispersion AA1 obtained in (a) above were added with 200 parts of methylisobutyl ketone and 22.7 parts of 3N-NaOH aqueous solution and the temperature was raised to 85°C. A hydrolysis reaction was carried out at 85±2°C for 3 hours. Then, the temperature was lowered to 80°C and after adding 22.7 parts of 3N-hydrochloric acid aqueous solution to neutralize, 71.4 parts of acrylic resin I solution obtained in the foregoing Manufacturing Example I of acrylic resin were added as a particle dispersion stabilizing resin. After stirring for 10 minutes, 25 parts of triethylamine acetate 20% aqueous solution (referred to hereinafter) were added and immediately thereafter the stirring was stopped to leave the dispersion to stand still. Since the dispersion was separated into an

upper organic layer wherein crosslinked polymer fine particles were dispersed and a lower water layer, the water layer was removed.

To the remaining organic layer wherein the crosslinked polymer fine particles were dispersed, 200 parts of deionized water were added and the temperature was raised to 70 °C while stirring. When 70 °C was reached, 12.5 parts of triethylamine acetate 20% aqueous solution were added and immediately thereafter the stirring was stopped to leave the dispersion to stand still. Since the dispersion was again separated into two layers: an upper organic layer wherein the crosslinked polymer fine particles were dispersed and a lower water layer, the lower water layer was removed. In the remaining organic layer, 2.6% by weight of residual water was determined by Karl Fischer moisture meter.

Then the organic layer was cooled down to 50 °C. After 70 parts of methyl orthoformate were added dropwise from the dropping funnel taking 30 minutes, the reaction was continued at 50 °C for 30 minutes to decompose the residual water. Then, 120 parts of xylene were added and a Dean & Stark apparatus was newly fixed between the reflux condenser and the flask, connecting the upper portion of the reflux condenser with an aspirator, whereby the inside pressure of the flask was reduced while heating and stirring to distill off the solvent at 80±10 °C under 300±100 mmHg until the non-volatile reached 50%. Thus, crosslinked polymer fine particle non-aqueous dispersion AA2 was obtained. Characteristics of the obtained non-aqueous dispersion are shown in Table 3.

(Manufacture of triethylamine acetate 20% aqueous solution)

The triethylamine acetate 20% aqueous solution was prepared by dissolving 7.5 parts of acetic acid into 80 parts of deionized water and adding thereto 12.5 parts of triethylamine at room temperature while stirring, taking 30 minutes.

Manufacturing Examples AB~AK and BA~BM

(a) Manufacture of crosslinked polymer fine particle aqueous dispersion.

Using the emulsion polymerization compositions shown in Table 3, AB~AK and BA~BM, the same procedure as Manufacturing Example AA (a) was conducted, whereby the respective crosslinked polymer fine particle aqueous dispersions AB1~AK1 and BA1~BM1 having characteristics as shown in Table 3 were obtained.

(b) Manufacture of crosslinked polymer fine particle non-aqueous dispersion.

The same procedure as Manufacturing Example AA (b) was conducted except that the crosslinked polymer fine particle aqueous dispersions AB1~AK1 and BA1~BM1 obtained in AB(a)~AK(a) and BA(a)-~BM(a), respectively, and the particle dispersion stabilizing resins respectively shown in Table 3 were used and the final non-volatiles for BA~BM were made to be 40%. Thus, the crosslinked polymer fine particle non-aqueous dispersions AB2~AK2 and BA2~BM2 having characteristics as shown in Table 3 were obtained, respectively.

Comparative Manufacturing Example N

Manufacture of crosslinked polymer fine particle non-aqueous dispersion.

Five hundred parts of the crosslinked polymer fine particle aqueous dispersion BE1 obtained in BE(a) above were added with 200 parts of methylisobutyl ketone and the temperature was raised to 80 °C. Then, 71.4 parts of acrylic resin V solution obtained in the foregoing Manufacturing Example V of acrylic resin were added as a particle dispersion stabilizing resin and stirring was conducted for 10 minutes as the temperature was kept at 80 °C. Then, 25 parts of triethylamine acetate 20% aqueous solution (as aforecited) were added and immediately thereafter the stirring was stopped to leave the dispersion to stand still. Since the dispersion was separated into an upper organic layer wherein crosslinked polymer fine particles were dispersed and a lower water layer, the water layer was removed.

Then, the organic layer was cooled down to 50 °C and after 70 parts of methyl orthoformate were added dropwise from the dropping funnel taking 30 minutes, the reaction was continued at 50 °C for 30 minutes to decompose the residual water. Then, 200 parts of xylene were added and a Dean & Stark apparatus was newly fixed between the reflux condenser and the flask, connecting the upper portion of the

reflux condenser with anaspirator, whereby the inside pressure of the flask was reduced while heating and stirring to distill off the solvent at 80±10°C under 300±100 mmHg until the non-volatile reached 40%. Thus, crosslinked polymer fine particle non-aqueous dispersion N2 was obtained. Characteristics of the obtained non-aqueous dispersion are shown in Table 3.

Comparative Manufacturing Examples O and P

Manufacture of crosslinked polymer fine particle non-aqueous dispersion.

The same procedure as Manufacturing Example N was conducted except that the crosslinked polymer fine particle aqueous dispersions BF1 and BJ1 obtained in BF(a)~BJ(a) respectively, and the particle dispersion stabilizing resins respectively shown in Table 3 were used. Thus, the crosslinked polymer fine particle non-aqueous dispersions O2 and P2 having characteristics as shown in Table 3 were obtained, respectively.

Table 3(a)

Unit: part

| | | | Manufacturing example of CPFP 8) | | | | | |
|---|---|---|---|---|---|---|---|---|
| | | | AA | AB | AC | AD | AE | AF |
| Emulsion polymerization composition | Surfactant aq. solution 1) | Deionized water | 380 | 380 | 380 | 380 | 380 | 380 |
| | | Surfactant | Rapisol B90 5.5 | Rapisol B90 5.5 | Rapisol B90 5.5 | Rapisol B90 5.5 | Sintrex L100 7.0 | Sintrex L100 7.0 |
| | Polymerization initiator aq.solution-1 | Deionized water | 10.0 | 10.0 | 10.0 | 10.0 | 10.0 | 10.0 |
| | | Na persulfate | 0.3 | 0.3 | 0.3 | 0.3 | 0.3 | 0.3 |
| | Polymerization initiator aq.solution-2 | Deionized water | 10.0 | 10.0 | 10.0 | 10.0 | 10.0 | 10.0 |
| | | Na persulfate | 0.3 | 0.3 | 0.3 | 0.3 | 0.3 | 0.3 |
| | α,β-ethylenically unsaturated monomer 2) | OH-containing α,β-ethylenically unsaturated monomer | HEMA 2.3 | HEMA 7.0 | HEA 4.1 | HPMA 18.0 | HPMA 35.9 | HEMA 20.9 |
| | | Polyfunctional α,β-ethylenically unsaturated monomer | 1,4-BDDM 50.0 | 1,6-HDDM 20.0 | DVB 10.0 1,6-HDDM 44.0 | EGDM 20.0 | EGDM 5.0 | DVB 20.0 1,6-HDDM 10.0 |
| | | Other α,β-ethylenically unsaturated monomer | St 10.0 BMA 37.7 | St 20.0 MMA 53.0 | St 10.0 MMA 31.9 | St 20.0 EHMA 42.0 | St 20.0 BMA 39.1 | BMA 49.1 |
| Particle dispersion stabilizing resin solution during conversion to non-aq. system 3) | | | Acrylic I 71.4 | Acrylic II 71.4 | Acrylic III 71.4 | Polyester VII 71.4 | Polyester VIII 71.4 | Acrylic II 71.4 |
| Characteristics | Hydroxyl value of particles | | 10 | 30 | 20 | 70 | 140 | 90 |
| | After emulsion polymerization | Non-volatile (%) 4) | 20.2 | 20.2 | 20.5 | 20.3 | 20.2 | 20.2 |
| | | Viscosity (cps) 5) | 43 | 65 | 40 | 55 | 70 | 52 |
| | | Av. particle dia.(μm) 6) | 0.050 | 0.062 | 0.040 | 0.048 | 0.056 | 0.045 |
| | After conversion to non-aq. system | Non-volatile (%) | 50.3 | 50.8 | 51.0 | 50.5 | 49.9 | 49.9 |
| | | Viscosity (cps) | 455 | 460 | 433 | 471 | 543 | 481 |
| | | Av. particle dia.(μm) | 0.058 | 0.070 | 0.050 | 0.050 | 0.066 | 0.053 |
| | | Water content (%) 7) | 0.3 | 0.3 | 0.3 | 0.2 | 0.4 | 0.3 |

Table 3(b)

Unit: part

| | | | Manufacturing example of CPFP | | | | |
|---|---|---|---|---|---|---|---|
| | | | AG | AH | AI | AJ | AK |
| Emulsion polymerization composition | Surfactant aq. solution 1) | Deionized water | 380 | 380 | 380 | 380 | 380 |
| | | Surfactant | Sintrex L100 7.0 | Sintrex L100 7.0 | Aerosol MA80 6.3 | Aerosol MA80 6.3 | Aerosol MA80 6.3 |
| | Polymerization initiator aq.solution-1 | Deionized water | 10.0 | 10.0 | 10.0 | 10.0 | 10.0 |
| | | Na persulfate | 0.3 | 0.3 | 0.3 | 0.3 | 0.3 |
| | Polymerization initiator aq.solution-2 | Deionized water | 10.0 | 10.0 | 10.0 | 10.0 | 10.0 |
| | | Na persulfate | 0.3 | 0.3 | 0.3 | 0.3 | 0.3 |
| | α,β-ethylenically unsaturated monomer 2) | OH-containing α,β-ethylenically unsaturated monomer | HEMA 11.6 | HEA 16.5 | HEA 20.7 | HEA 2.1 | HPMA 20.5 |
| | | Polyfunctional α,β-ethylenically unsaturated monomer | EGDM 35.0 | 1,4-BDDM 10.0 | 1,4-BDDM 40.0 | 1,4-BDDM 70.0 | DVB 16.7 |
| | | Other α,β-ethylenically unsaturated monomer | St 20.0 MMA 33.4 | St 20.0 MMA 53.5 | St 20.0 EHMA 19.3 | MMA 27.9 | St 3.3 EHMA 59.5 |
| Particle dispersion stabilizing resin solution during conversion to non-aq. system 3) | | | Acrylic II 71.4 | Acrylic III 71.4 | Acrylic III 71.4 | Polyester VIII 18.5 | Acrylic I 18.5 |
| Characteristics | Hydroxyl value of particles | | 50 | 80 | 100 | 10 | 80 |
| | After emulsion polymerization | Non-volatile (%) 4) | 20.1 | 20.0 | 20.0 | 20.0 | 20.3 |
| | | Viscosity (cps) 5) | 47 | 58 | 55 | 45 | 66 |
| | | Av. particle dia.(μm) 6) | 0.045 | 0.058 | 0.045 | 0.040 | 0.053 |
| | After conversion to non-aq. system | Non-volatile (%) | 50.5 | 50.4 | 50.0 | 49.8 | 50.6 |
| | | Viscosity (cps) | 455 | 461 | 485 | 444 | 460 |
| | | Av. particle dia.(μm) | 0.048 | 0.062 | 0.050 | 0.045 | 0.060 |
| | | Water content (%) 7) | 0.4 | 0.3 | 0.3 | 0.1 | 0.4 |

Table 3(c)

Unit: part

| | | | Manufacturing example of CPFP | | | | | |
|---|---|---|---|---|---|---|---|---|
| | | | BA | BB | BC | BD | BE | BF |
| Emulsion polymerization composition | Surfactant aq. solution 1) | Deionized water | 380 | 380 | 380 | 380 | 380 | 380 |
| | | Surfactant | Rapisol B90 5.5 | Rapisol B90 5.5 | Rapisol B90 5.5 | Sintrex L100 7.0 | Rapisol B90 5.5 | Aerosol MA80 6.3 |
| | Polymerization initiator aq.solution-1 | Deionized water | 10.0 | 10.0 | 10.0 | 10.0 | 10.0 | 10.0 |
| | | Na persulfate | 0.3 | 0.3 | 0.3 | 0.3 | 0.3 | 0.3 |
| | Polymerization initiator aq.solution-2 | Deionized water | 10.0 | 10.0 | 10.0 | 10.0 | 10.0 | 10.0 |
| | | Na persulfate | 0.3 | 0.3 | 0.3 | 0.3 | 0.3 | 0.3 |
| | α,β-ethylenically unsaturated monomer 2) | OH-containing α,β-ethylenically unsaturated monomer | HEA 2.0 | HEMA 20.9 | HPMA 30.8 | HPMA 26.9 | HEMA 27.8 | HEA 9.2 |
| | | Polyfunctional α,β-ethylenically unsaturated monomer | 1,6-BDDM 40.0 | 1,4-BDDM 15.0 | EGDM 17.5 | 1,4-BDDM 25.0 | DVB 16.7 1,4-BDDM 20.0 | EGDM 70.0 |
| | | Other α,β-ethylenically unsaturated monomer | St 10.0 BMA 48.0 | MMA 24.0 BMA 40.1 | MMA 51.7 | MMA 48.1 | St 5.0 BMA 30.5 | St 5.0 EHMA 15.8 |
| Particle dispersion stabilizing resin solution during conversion to non-aq. system 3) | | | Acrylic VI 18.5 | Acrylic VI 18.5 | Acrylic VI 18.5 | Acrylic V 71.4 | Acrylic V 71.4 | Acrylic V 71.4 |
| Characteristics | Hydroxyl value of particles | | 10 | 90 | 120 | 105 | 120 | 45 |
| | After emulsion polymerization | Non-volatile (%) 4) | 20.1 | 20.1 | 20.4 | 20.5 | 20.0 | 20.0 |
| | | Viscosity (cps) 5) | 41 | 70 | 75 | 75 | 77 | 61 |
| | | Av. particle dia.(μm) 6) | 0.048 | 0.051 | 0.058 | 0.055 | 0.059 | 0.050 |
| | After conversion to non-aq. system | Non-volatile (%) | 39.9 | 40.5 | 39.9 | 40.0 | 40.0 | 40.1 |
| | | Viscosity (cps) | 315 | 366 | 370 | 285 | 303 | 251 |
| | | Av. particle dia.(μm) | 0.055 | 0.065 | 0.065 | 0.060 | 0.066 | 0.052 |
| | | Water content (%) 7) | 0.3 | 0.3 | 0.3 | 0.3 | 0.2 | 0.3 |

Table 3(d)

Unit: part

| | | | Manufacturing example of CPFP | | | | |
|---|---|---|---|---|---|---|---|
| | | | BG | BH | BI | BJ | BK |
| Emulsion polymerization composition | Surfactant aq. solution 1) | Deionized water | 380 | 380 | 380 | 380 | 380 |
| | | Surfactant | Aerosol MA80 6.3 | Sintrex L100 7.0 | Rapisol B90 5.5 | Aerosol MA80 6.3 | Aerosol MA80 6.3 |
| | Polymerization initiator aq.solution-1 | Deionized water | 10.0 | 10.0 | 10.0 | 10.0 | 10.0 |
| | | Na persulfate | 0.3 | 0.3 | 0.3 | 0.3 | 0.3 |
| | Polymerization initiator aq.solution-2 | Deionized water | 10.0 | 10.0 | 10.0 | 10.0 | 10.0 |
| | | Na persulfate | 0.3 | 0.3 | 0.3 | 0.3 | 0.3 |
| | α,β-ethylenically unsaturated monomer 2) | OH-containing α,β-ethylenically unsaturated monomer | HPMA 18.0 | HEMA 4.6 | HPMA 35.9 | HEMA 13.9 | HPMA 12.8 |
| | | Polyfunctional α,β-ethylenically unsaturated monomer | 1,4-BDDM 35.0 | DVB 8.3 | DVB 16.7 1,6-HDDM 40.0 | DVB 9.0 EGDM 15.0 | 1,6-HDDM 20.0 |
| | | Other α,β-ethylenically unsaturated monomer | BMA 47.0 | St 15.0 BMA 72.1 | St 5.5 MMA 32.7 | St 2.5 BMA 59.6 | EHMA 10.5 BMA 56.7 |
| Particle dispersion stabilizing resin solution during conversion to non-aq. system 3) | | | Acrylic VI 18.5 | Polyester VIII 18.5 | Polyester VIII 18.5 | Acrylic V 71.4 | Acrylic IV 71.4 |
| Characteristics | Hydroxyl value of particles | | 70 | 20 | 140 | 60 | 50 |
| | After emulsion polymerization | Non-volatile (%) 4) | 20.1 | 20.1 | 20.1 | 20.2 | 20.1 |
| | | Viscosity (cps) 5) | 55 | 49 | 57 | 66 | 58 |
| | | Av. particle dia.(μm) 6) | 0.045 | 0.045 | 0.047 | 0.053 | 0.058 |
| | After conversion to non-aq. system | Non-volatile (%) | 40.0 | 39.9 | 40.3 | 40.0 | 40.1 |
| | | Viscosity (cps) | 322 | 310 | 354 | 216 | 220 |
| | | Av. particle dia.(μm) | 0.057 | 0.049 | 0.053 | 0.058 | 0.066 |
| | | Water content (%) 7) | 0.2 | 0.2 | 0.1 | 0.3 | 0.3 |

Table 3(e)

Unit: part

| | | | Manufacturing example of CPFP | | Comparative manufacturing example of CPFP | | |
|---|---|---|---|---|---|---|---|
| | | | BL | BM | N | O | P |
| Emulsion polymerization composition | Surfactant aq. solution 1) | Deionized water | 380 | 380 | Same as manufacturing Example BE(a) | Same as manufacturing Example BF(a) | Same as manufacturing Example BJ(a) |
| | | Surfactant | Aerosol MA80 6.3 | Sintrex L100 7.0 | | | |
| | Polymerization initiator aq.solution-1 | Deionized water | 10.0 | 10.0 | | | |
| | | Na persulfate | 0.3 | 0.3 | | | |
| | Polymerization initiator aq.solution-2 | Deionized water | 10.0 | 10.0 | | | |
| | | Na persulfate | 0.3 | 0.3 | | | |
| | α,β-ethylenically unsaturated monomer 2) | OH-containing α,β-ethylenically unsaturated monomer | HEMA 13.9 | - | | | |
| | | Polyfunctional α,β-ethylenically unsaturated monomer | 1,6-HDDM 40.0 | DVB 16.7 | | | |
| | | Other α,β-ethylenically unsaturated monomer | BMA 46.1 | St 20.0 EHMA 63.3 | | | |
| Particle dispersion stabilizing resin solution during conversion to non-aq. system 3) | | | Acrylic IV 71.4 | Polyester VIII 18.5 | | | |
| Characteristics | Hydroxyl value of particles | | 60 | 0 | | | |
| | After emulsion polymerization | Non-volatile (%) 4) | 20.2 | 20.2 | | | |
| | | Viscosity (cps) 5) | 63 | 45 | | | |
| | | Av. particle dia.(μm) 6) | 0.058 | 0.048 | | | |
| | After conversion to non-aq. system | Non-volatile (%) | 40.4 | 40.0 | 40.2 | 40.3 | 40.2 |
| | | Viscosity (cps) | 285 | 333 | 325 | 270 | 231 |
| | | Av. particle dia.(μm) | 0.066 | 0.055 | 0.067 | 0.055 | 0.058 |
| | | Water content (%) 7) | 0.3 | 0.3 | 0.3 | 0.3 | 0.3 |

Note 1) Rapisol B90: as aforecited,

Sintrex L-100: the trade name of sodium laurylsulfate manufactured by Nippon Oil & Fats Co., Ltd.; active ingredient, 100%,

Aerosol MA-80: the trade name of sodium dihexyl sulfosuccinate manufactured by American Cyanamid; active ingredient, 80%,

Note 2) α,β-ethylenically unsaturated monomer mixture:

Hydroxyl group-containing α,β-ethylenically unsaturated monomers:

HEMA: 2-hydroxyethyl methacrylate,

HEA: 2-hydroxyethyl acrylate,

HPMA: 2-hydroxypropyl methacrylate,

Polyfunctional α,β-ethylenically unsaturated monomers:

1,4-BDDM: 1,4-butanediol dimethacrylate,

1,6-HDDM: 1,6-hexanediol dimethacrylate,

DVB: divinyl benzene; 60% active ingredient and 40% ethylvinyl benzene,

EGDM: ethyleneglycol dimethacrylate,

Other α,β-ethylenically unsaturated monomers:

St: styrene,

BMA: n-butyl methacrylate,

MMA: methyl methacrylate,

EHMA: 2-ethylhexyl methacrylate,

Note 3) Various resin solutions obtained in Manufacturing Examples I~VI of acrylic resin and Manufacturing Examples VII and VIII of polyester resin,

Note 4) In accordance with JIS K 5400 8.2, non-volatile,

Note 5) Measured with Brookfield viscometer at 60 rpm and 20°C.

Note 6) Measured with "Nicomp Model 370" (the trade name) manufactured by Pacific Scientific, Inc.

Note 7) measured with KF-05 type moisture meter manufactured by Mitsubishi Kasei Corp.

Note 8) Crosslinked polymer fine particles (hereinafter abbreviated as CPFP in all Tables).

Manufacturing Example BQ

(a) Manufacture of crosslinked polymer fine particle aqueous dispersion (core/shell type emulsion polymerization).

| Surfactant aqueous solution | |
|---|---|
| Deionized water<br>Sintrex L100 (as aforecited in Manufacturing Example AE) | 380.0 parts<br>7.0 " |

| Polymerization initiator aqueous solution-1 | |
|---|---|
| Deionized water<br>Sodium persulfate | 10.0 parts<br>0.3 " |

| Core-forming $\alpha,\beta$-ethylenically unsaturated monomer mixture | |
|---|---|
| 2-Hydroxyethyl methacrylate<br>Ethyleneglycol dimethacrylate<br>Styrene<br>n-Butyl methacrylate | 2.8 parts<br>12.0 "<br>30.0 "<br>15.2 " |

| Shell-forming α,β-ethylenically unsaturated monomer mixture | |
|---|---|
| 2-Hydroxypropyl methacrylate | 16.4 parts |
| 1,4-Butanediol dimethacryalte | 14.0 " |
| Methyl methacrylate | 9.6 " |

| Polymerization initiator aqueous solution-2 | |
|---|---|
| Deionized water | 10.0 parts |
| Sodium persulfate | 0.3 " |

Into the same flask as used in Manufacturing Example AA (a), the surfactant aqueous solution was introduced and after raising the temperature to 80 °C under nitrogen stream, the polymerization initiator aqueous solution-1 was added. After the temperature had been raised to 80 °C, the core-forming α,β-ethylenically unsaturated monomer mixture was added dropwise taking 108 minutes, as the temperature of the mixture in the flask was kept at 80±2 °C. Subsequently the shell-forming α,β-ethylenically unsaturated monomer mixture was added dropwise taking 72 minutes. From 1 hour after the commencement of the addition of the core-forming α,β-ethylenically unsaturated monomer mixture, the polymerization initiator aqueous solution-2 was also added dropwise, taking 2 hours, parallel with the addition of the core- and shell-forming α,β-ethylenicallyunsaturated monomer mixtures. After completion of the addition of the α,β-ethylenically unsaturated monomer mixtures and polymerization initiator aqueous solution-2, polymerization was further conducted at 80 °C for 2 hours and a crosslinked polymer fine particle aqueous dispersion BQ1 having characteristics as shown in Table 4 was obtained.

(b) Manufacture of crosslinked polymer fine particle non-aqueous dispersion.

The same procedure as Manufacturing Example AA (b) above was conducted except that the crosslinked polymer fine particle aqueous dispersion BQ1 obtained in (a) above was used, 18.5 parts of the acrylic resin V solution obtained in Manufacturing Example V of acrylic resin was used as a particle dispersion stabilizing resin and, further, the final non-volatile was made to be 40%. Then, the crosslinked polymer fine particle non-aqueous dispersion BQ2 having characteristics as shown in Table 4 was obtained.

<u>Manufacturing Example BR~BU</u>

(a) Manufacture of crosslinked polymer fine particle aqueous dispersion.

Using the emulsion polymerization compositions shown in Table 4, BR~BU, the same procedure as Manufacturing Example BQ (a) was conducted, whereby the respective crosslinked polymer fine particle aqueous dispersions BR1~BU1 having characteristics as shown in Table 4 were obtained. However, it took 3 hours in total to drop the core- and shell-forming α,β-ethylenically unsaturated monomer mixtures and the dropping time ratio of the both monomer mixtures was made to correspond to the weight ratio of the mixtures occupying the total mixture.

(b) Manufacture of crosslinked polymer fine particle non-aqueous dispersion.

The same procedure as Manufacturing Example AA (b) was conducted except that the crosslinked polymer fine particle aqueous dispersions BR1~BU1 obtained in BR(a)~BU(a), respectively, and the particle dispersion stabilizing resins respectively shown in Table 4 were used and the final non-volatiles were made to be 40%. Thus, the crosslinked polymer fine particle non-aqueous dispersions BR2~BU2 having characteristics as shown in Table 4 were obtained, respectively.

Table 4(a)

Unit: part

| | | | Manufacturing example of CPFP | | | | |
|---|---|---|---|---|---|---|---|
| | | | BQ | BR | BS | BT | BU |
| Emulsion polymerization composition | Surfactant aq. solution 1) | Deionized water | 380 | 380 | 380 | 380 | 380 |
| | | Surfactant | Sintrex L100 7.0 | Rapisol B90 5.5 | Rapisol B90 5.5 | Sintrex L100 7.0 | Aerosol MA80 6.3 |
| | Polymerization initiator aq.solution-1 | Deionized water | 10.0 | 10.0 | 10.0 | 10.0 | 10.0 |
| | | Na persulfate | 0.3 | 0.3 | 0.3 | 0.3 | 0.3 |
| | Polymerization initiator aq.solution-2 | Deionized water | 10.0 | 10.0 | 10.0 | 10.0 | 10.0 |
| | | Na persulfate | 0.3 | 0.3 | 0.3 | 0.3 | 0.3 |
| | Core-forming α,β-ethylenically unsaturated monomer mixture 2) | OH-containing α,β-ethylenically unsaturated monomer | HEMA 2.8 | HPMA 7.2 | HEMA 5.6 | - | - |
| | | Polyfunctional α,β-ethylenically unsaturated monomer | EGDM 12.0 | DVB 35.0 | 1,6-HDDM 9.0 | EGDM 20.0 | EGDM 45.0 |
| | | Other α,β-ethylenically unsaturated monomer | St 30.0 BMA 15.2 | BMA 27.8 | St 10.0 EHMA 35.4 | St 15.0 MMA 15.0 | St 2.5 BMA 12.5 |
| | Shell-forming α,β-ethylenically unsaturated monomer mixture 2) | OH-containing α,β-ethylenically unsaturated monomer | HPMA 16.4 | HEMA 12.5 | HPMA 15.4 | HEA 18.1 | HEA 8.3 |
| | | Polyfunctional α,β-ethylenically unsaturated monomer | 1,4-BDDM 14.0 | 1,4-BDDM 15.0 | EGDM 22.0 | DVB 5.0 1,4-BDDM 15.0 | DVB 2.5 1,4-BDDM 20.0 |
| | | Other α,β-ethylenically unsaturated monomer | MMA 9.6 | BMA 2.5 | BMA 2.6 | St 5.0 MMA 6.9 | EHMA 9.2 |

Table 4(b)

Unit: part

| | | | Manufacturing example of CPFP | | | | |
|---|---|---|---|---|---|---|---|
| | | | BQ | BR | BS | BT | BU |
| Particle dispersion stabilizing resin solution during conversion to non-aq. system 3) | | | Acrylic V 18.5 | Acrylic Ⅲ 71.4 | Acrylic Ⅲ 71.4 | Acrylic Ⅲ 71.4 | Polyester Ⅷ 71.4 |
| Charac-teristics | Hydroxyl value of shell portion of particle | | 160 | 180 | 150 | 175 | 100 |
| | After emulsion polymer-ization | Non-volatile (%) 4) | 20.0 | 20.0 | 20.2 | 20.1 | 20.1 |
| | | Viscosity (cps) 5) | 71 | 80 | 71 | 64 | 63 |
| | | Av. particle dia.(μm) 6) | 0.044 | 0.058 | 0.057 | 0.053 | 0.059 |
| | | Aq. dispersion of CPFP | BQ1 | BR1 | BS1 | BT1 | BU1 |
| | After conver-sion to non-aq. system | Non-volatile (%) | 39.8 | 40.2 | 40.2 | 40.2 | 40.0 |
| | | Viscosity (cps) | 391 | 335 | 344 | 320 | 325 |
| | | Av. particle dia.(μm) | 0.046 | 0.059 | 0.064 | 0.060 | 0.063 |
| | | Water content (%) 7) | 0.2 | 0.1 | 0.2 | 0.1 | 0.1 |
| | | Non-aq. dispersion of cross-linked polymer fine particles | BQ2 | BR2 | BS2 | BT2 | BU2 |

Note 1) : as aforecited in Table 3, Note 1),
Note 2) : as aforecited in Table 3, Note 2),
Note 3) : as aforecited in Table 3, Note 3),
Note 4) : as aforecited in Table 3, Note 4),
Note 5) : as aforecited in Table 3, Note 5),
Note 6) : as aforecited in Table 3, Note 6),
Note 7) : as aforecited in Table 3, Note 7),

Comparative Manufacturing Example V

(a) Manufacture of unsaturated ester.

A four-necked flask equipped with a stirrer, a thermometer, a Dean & Stark apparatus provided with a reflux condenser and a nitrogen gas feed pipe, was charged with 1,500 parts of 12-hydroxystearic acid and heated to raise the temperature up to 200 °C while stirring, as feeding nitrogen gas. When the acid value reached 39, the reaction was stopped. After the reactants were left to cool, 159 parts of xylene were added and a 12-hydroxystearic acid 5 mole condensate solution having a non-volatile of 90% was obtained. In this reaction, 72 parts of water were separated. Then, using this 12-hydroxystearic acid 5 mole condensate solution, a mixture having the below-described composition was stirred at a temperature of 120 °C in a four-necked flask equipped with a stirrer, a thermometer, a reflux condenser and a nitrogen gas feed pipe, to conduct an esterification reaction until acid value on solid basis became below 1.0 and unsaturated ester solution having a non-volatile of 80% was obtained.

| | |
|---|---|
| 12-Hydroxystearic acid 5 mole condensate solution | 1,586.67 parts |
| Glycidyl methacrylate | 142.00 " |
| N,N-dimethyl benzylamine | 3.93 " |
| Hydroquinone | 1.96 " |
| Xylene | 227.94 " |

(b) Manufacture of amphipathic dispersion stabilizer

A four-necked flask equipped with a stirrer, a reflux condenser, a thermometer and a dropping funnel was charged with 405.0 parts of ethyl acetate and 203.4 parts of n-butyl acetate and refluxed while stirring. Then, during refluxing, a mixture having the below-described composition was added at a constant adding rate taking 3 hours and, by further refluxing for 2 hours, an amphipathic dispersion stabilizer having a non-volatile of 33% was obtained.

| | |
|---|---|
| The unsaturated ester solution prepared in the above paragraph (a) | 275.0 parts |
| Methyl methacrylate | 104.5 " |
| Acrylic acid | 5.5 " |
| Azo-di-isobutyronitrile | 6.6 " |

(c) Manufacture of polymer non-aqueous dispersion

A four-necked flask equipped with a stirrer, a thermometer, a reflux condenser and a device for adding a liquid feed to returning condensates, was charged with a mixture having the below-described composition.

| | |
|---|---|
| Mineral spirit | 1,588.0 parts |
| Hexane | 389.0 " |
| Heptane | 2,080.2 " |
| Methyl methacrylate | 236.4 " |
| Azo-di-isobutyronitirle | 18.7 " |
| Amphipathic dispersion stabilizer solution prepared in the above paragraph (b) | 88.1 " |

The above contents were heated to 100 °C and kept under refluxing for 1 hour. Then the under-enumerated components were premixed and added at a constant adding rate to hydrocarbons returning from the condenser, taking 6 hours.

| | |
|---|---|
| Methyl methacrylate | 4,491.8 parts |
| Methacrylic acid | 45.8 " |
| Glycidyl methacrylate | 45.8 " |
| Azo-di-isobutyronitrile | 60.2 " |
| Amphipathic dispersion stabilizer solution prepared in the above paragraph (b) | 945.3 " |

However, for 1 hour at the last stage of the addition, 3.3 parts of triethylene diamine were additionally mixed in the above-mentioned mixture. After completion of the addition, the reaction mixture was kept under refluxing for 3 hours to provide polymer non-aqueous dispersion having a non-volatile of 52% and containing 48.2% polymer particles having an average particle diameter of 0.2 µm.

(d) Modification with auxiliary polymer of particles

A four-necked flask equipped with the devices used in the above step (c) was charged with the under-described components and heated up to a refluxing temperature (115 °C).

| | |
|---|---|
| Polymer non-aqueous dispersion prepared in the above item (c) | 4,747.1 parts |
| Ethyl cyclohexane | 1,638.2 " |

Then, the under-enumerated components were premixed and added at a constant adding rate to hydrocarbons returning from the condenser, taking 3 hours.

| | |
|---|---|
| Methyl methacrylate | 313.2 parts |
| 2-Hydroxyethyl methacrylate | 527.1 " |
| Methacrylic acid | 14.6 " |
| Butyl methacrylate | 369.7 " |
| 2-Ethylhexyl acrylate | 101.8 " |
| Styrene | 568.8 " |
| t-Butyl peroxybenzoate | 90.6 " |
| Octyl mercaptan | 84.7 " |
| Arnphipathic dispersion stabilizer solution prepared in the above paragraph (b) | 149.5 " |

After completion of the addition, the reaction mixture was refluxed for 2 hours. Then the following solvent mixture was added to obtain polymer non-aqueous dispersion V having a non-volatile of 45% and containing 25% polymer particles.

| | |
|---|---|
| n-Butyl alcohol | 559.0 parts |
| Xylene | 372.3 " |
| Butyl acetate | 462.7 " |

(A) The case where 1 kind of crosslinked polymer fine particles was used.

Example 1

(1) Preparation of base coat paint

| | |
|---|---|
| Acrylic resin solution I obtained in Acrylic Resin Manufacturing Example I | 76.2 parts |
| Cymel 303 (the trade name of methylated melamine resin manufactured by American Cyanamid, 98% non-volatile) | 20.4 " |
| Crosslinked polymer fine particle non-aqueous dispersion AA2 obtained in Manufacturing Example AA | 227.2 " |
| Aluminum Paste 7160N (the trade name of aluminum pigment manufactured by Toyo Alminium K.K., 65% non-volatile) | 15.4 " |
| Sulfonic acid catalyst (as described hereinafter) | 1.6 " |
| 10% xylene solution of Tinuvin 900 (the trade name of UV absorber manufactured by Ciba Geigy) | 10.0 " |
| n-Butyl alcohol | 1.0 " |

The coating composition having the above formulation was diluted to a coating viscosity (14 seconds at 20°C with Ford cup No. 4) with a thinner (toluene/xylene/n-butyl alcohol = 5/3/2 by weight) to prepare a base coat paint.

(Manufacturing process of sulfonic acid catalyst)

A three-necked flask equipped with a stirrer was charged with a mixture of the under-described composition and 98.1 parts of 37.2% hydrochloric acid was further added at room temperature while stirring to effect de-sodium reaction. In this case,the de-sodium reaction proceeded immediately after the addition of the hydrochloric acid and 58.5 parts of NaCl were separated out. After filtering off the separated NaCl by means of suction filtration, 79.0 parts of pyridine were added to the filtrate to provide a solution of an aliphatic sulfonic acid compound blocked with equimolar pyridine which had a 25% active ingredient (aliphatic sulfonic acid).

| | |
|---|---|
| $C_{18}H_{37}SO_3Na$ | 356.0 parts |
| n-Butyl alcohol | 861.4 " |

(2) Preparation of clear coat paint

| | |
|---|---|
| Acrylic resin solution II obtained in Manufacturing Example II of acrylic resin | 134.5 parts |
| Cymel 303 (the trade name of methylated melamine resin manufactured by American Cyanamid, 98% non-volatile) | 15.3 " |
| Crosslinked polymer fine particle non-aqueous dispersion AF2 obtained in Manufacturing Example AF | 28.6 " |
| 10% xylene solution of Tinuvin 900 (as aforecited in paragraph (1) above) | 10.0 " |
| 10% xylene solution of Sanol LS-C10-440 (the trade name of hindered amine light stabilizer, manufactured by Sankyo Co., Ltd.) | 10.0 " |
| Sulfonic acid catalyst (as aforecited in paragraph (1) above) | 1.6 " |
| n-Butyl alcohol | 1.0 " |
| Moda-flow (the trade name, manufactured by Monsanto) | 0.5 " |

The coating composition having the above formulation was diluted to a coating viscosity (25 seconds at 20°C with Ford cup No. 4) with a thinner (toluene/xylene/n-butyl alcohol = 4/4/2 by weight) to prepare a clear coat paint.

(3) Preparation of coating film

A cationic electrocoating, Aqua No. 4200 (the trade name, manufactured by Nippon Oil & Fats Co., Ltd.), was electrocoated onto a zinc phosphate treated mild steel sheet, so as to yield a dry film thickness of 20 µm and baked at 175°C for 25 minutes. Further, the sheet was spray-coated with a sealer, Epico No. 1500 CP sealer (the trade name, manufactured by Nippon Oil & Fats Co., Ltd.) so as to yield a dry film thickness of 40 µm, followed by baking at 140°C for 30 minutes, to prepare a test sheet. This test sheet was air-spray-coated with the base coat paint obtained in the foregoing paragraph (1) on two stages with an interval of 1 minute 30 seconds, so as to yield a dry film thickness of 20 µm. After setting for 3 minutes in a vertical position, the clear coat paint obtained in the foregoing paragraph (2) was air-spray-coated, followed by baking at 140°C for 30 minutes in a vertical position. Thus, a leveled, brilliant coating film of excellent appearance was obtained, which was excellent in aluminum flake orientation and sag prevention effect. Further, excellent film appearance data and film performance were obtained as shown in Table 9.

Example 2~6

(1) Preparation of base coat paint

With the starting material mixtures having the compositions shown in Table 5, the same procedure as Example 1, (1), was conducted, whereby the respective base coat coatings were prepared.

Table 5

Unit: part

| | Example | | | | |
|---|---|---|---|---|---|
| | 2 | 3 | 4 | 5 | 6 |
| Polyol resin 1) | Acrylic II 71.5 | Acrylic II 57.2 | Acrylic III 45.2 | Polyester VII 113.1 | Polyester VIII 109.5 |
| Curing agent 2) | Cymel 1130 40.0 | Cymel 1130 40.0 | Cymel 1168 61.2 | Resimene 755 30.0 | Resimene 755 30.0 |
| Non-aq. dispersion of CPFP 3) | AB2 112.5 | AB2 168.7 | AC2 84.0 | AD2 14.1 | AE2 28.6 |
| Al paste 7160N 4) | 15.4 | 15.4 | 15.4 | 15.4 | 15.4 |
| Sulfonic acid catalyst 5) | 1.6 | 1.6 | 1.6 | 1.6 | 1.6 |
| 10% xylene solution of Tinuvin 900 6) | 10.0 | 10.0 | 10.0 | 10.0 | 10.0 |
| n-Butyl alcohol | 1.0 | 1.0 | 1.0 | 1.0 | 1.0 |

Note 1) Resin solutions obtained in ~~Acrylic Resin~~ Manufacturing Examples of acrylic resin and Manufacturing Examples of polyester resin,

Note 2) Cymel 1130: the trade name of a methyl/butyl mixed alkyletherified melamine resin manufactured by American Cyanamid, 100% non-volatile,

Cymel 1168: the trade name of a methyl/butyl mixed alkyletherified melamine resin manufactured by American Cyanamid, 98% non-volatile,

Resimene 755: the trade name of a methyl/butyl mixed alkyletherified melamine resin manufactured by Monsanto, 100% non-volatile,

Note 3) Non-aqueous dispersions obtained in Manufacturing Examples of crosslinked polymer fine particle,

Note 4) as aforecited in Example 1,

Note 5) as aforecited in Example 1,

Note 6) as aforecited in Example 1.

(2) Preparation of clear coat paint

With the starting material mixtures having the compositions shown in Table 6, the same procedure as Example 1 (2), was conducted, whereby the respective clear coat coatings were prepared.

Table 6

Unit: part

| | Example | | | | |
|---|---|---|---|---|---|
| | 2 | 3 | 4 | 5 | 6 |
| Polyol resin 1) | Acrylic II 92.9 | Acrylic II 85.7 | Acrylic III 48.8 | Acrylic II 114.5 | Acrylic III 10.24 |
| Curing agent 2) | Cymel 1130 40.0 | Cymel 1130 40.0 | Cymel 1168 61.2 | Resimene 755 30.0 | Resimene 755 30.0 |
| Non-aq. dispersion of CPFP 3) | AG2 28.3 | AG2 56.6 | AH2 70.9 | AH2 8.5 | AH2 56.7 |
| Sulfonic acid catalyst 4) | 1.6 | 1.6 | 1.6 | 1.6 | 1.6 |
| 10% xylene solution of Tinuvin 900 5) | 10.0 | 10.0 | 10.0 | 10.0 | 10.0 |
| 10% xylene solution of Sanol LS-C10-440 6) | 10.0 | 10.0 | 10.0 | 10.0 | 10.0 |
| n-Butyl alcohol | 1.0 | 1.0 | 1.0 | 1.0 | 1.0 |
| Moda-flow 7) | 0.5 | 0.5 | 0.5 | 0.5 | 0.5 |

Note 1) as aforecited in Table 4, Note 1,

Note 2) as aforecited in Table 4, Note 2,

Note 3) as aforecited in Table 4, Note 3,

Note 4) as aforecited in Example 1,

Note 5) as aforecited in Example 1,

Note 6) as aforecited in Example 1,

Note 7) as aforecited in Example 1.

(3) Preparation of coating film

With the respectively prepared paints (1) and (2) above, the same procedure as Example 1, (3), was conducted, whereby a leveled, brilliant coating film of excellent appearance was obtained in any of Examples 2~6, which was excellent in aluminum flake orientation and sag prevention effects. Further, excellent film appearance data and film performance were obtained as shown in Table 9.

Example 7

(1) Preparation of base coat paint

| | |
|---|---|
| Polyester resin solution VIII obtained in Manufacturing Example VIII of polyester resin | 85.7 parts |
| Non-aqueous dispersion AE2 obtained in Manufacturing Example AE of crosslinked polymer fine particles | 57.3 " |
| Aluminum Paste 7160N (as aforecited in Example 1) | 15.4 " |
| 10% xylene solution of Tinuvin 900 (as aforecited in Example 1) | 10.0 " |

A base coat paint was prepared immediately before coating by admixing a mixture having the above composition with 40.0 parts of Coronate EH (the trade name of hexamethylene diisocyanate trimer manufactured by Nippon Polyurethane Industry Co., Ltd., 100% non-volatile, 21% isocyanate group content) and diluting to a coating viscosity (14 seconds at 20°C with Ford cup No. 4) with a thinner (toluene/xylene/n-butyl acetate = 4/4/2 by weight).

(2) Preparation of clear coat paint

| | |
|---|---|
| Acrylic resin solution III obtain in Manufacturing Example III of acrylic resin | 101.2 parts |
| Non-aqueous dispersion AI2 obtained in Manufacturing Example AI of crosslinked polymer fine particles | 28.6 " |
| 10% xylene solution of Tinuvin 900 (as aforecited in Example 1) | 10.0 " |
| 10% xylene solution of Sanol LS-C10-440 (as aforecited in Example 1) | 10.0 " |

A clear coat paint was prepared immediately before coating, by admixing the mixture having the above composition with 35.0 parts of Coronate EH (as aforecited in paragraph (1) above) and diluting to a coating viscosity (25 seconds at 20 °C with Ford cup No. 4) with a thinner (xylene/n-butyl acetate = 5/5 by weight).

(3) Preparation of coating film

With the obtained respective paints (1) and (2), the same procedure as Example 1, (3), was conducted, whereby a leveled, brilliant coating film of excellent appearance was obtained, which was excellent in aluminum flake orientation and sag prevention effects. Further, excellent film appearance data and film performance were obtained as shown in Table 9.

Comparative Examples 1~3

(1) Preparation of base coat paints

With starting material mixtures having the compositions shown in Table 7, the same procedure as Example 1, (1), was conducted and the respective base coat paints were prepared.

Table 7

Unit: part

| | Comparative Example | | |
|---|---|---|---|
| | 1 | 2 | 3 |
| Polyol resin 1) | Acrylic II 158.0 | Polyester VIII 19.4 | Acrylic II 46.7 |
| Curing agent 2) | Cymel 1130 5.0 | Resimene 755 75.0 | Cymel 1130 40.0 |
| Non-aq. dispersion of CPFP 3) | AB2 1.4 | AJ2 267.7 | V 160.0 |
| Al-paste 7160N 4) | 15.4 | 15.4 | 15.4 |
| Sulfonic acid catalyst 5) | 1.6 | 1.6 | 1.6 |
| 10% xylene solution of Tinuvin 900 6) | 10.0 | 10.0 | 10.0 |
| n-Butyl alcohol | 1.0 | 1.0 | 1.0 |

Note 1) As aforecited in Table 5, Note 1.
Note 2) As aforecited in Table 5, Note 2.
Note 3) As aforecited in Table 5, Note 3.
Note 4) As aforecited in Example 1.
Note 5) As aforecited in Example 1.
Note 6) As aforecited in Example 1.

(2) Preparation of clear coat paints

With starting material mixtures having the compositions shown in Table 8, the same procedure as Example 1, (2), was conducted and the respective clear coat paints were prepared.

Table 8

Unit: part

| | Comparative Example | | |
|---|---|---|---|
| | 1 | 2 | 3 |
| Polyol resin 1) | Acrylic II 158.0 | Acrylic I 35.2 | Acrylic II 86.7 |
| Curing agent 2) | Cymel 1130 5.0 | Resimene 755 75.0 | Cymel 1130 40.0 |
| Non-aq. dispersion of CPFP 3) | AG2 1.4 | AK2 78.1 | V 40.0 |
| Sulfonic acid catalyst 4) | 1.6 | 1.6 | 1.6 |
| 10% xylene solution of Tinuvin 900 5) | 10.0 | 10.0 | 10.0 |
| 10% xylene solution of Sanol LS-C10-440 6) | 10.0 | 10.0 | 10.0 |
| n-Butyl alcohol | 1.0 | 1.0 | 1.0 |
| Moda-flow | 0.5 | 0.5 | 0.5 |

Note 1) As aforecited in Table 5, Note 1.

Note 2) As aforecited in Table 5, Note 2.

Note 3) As aforecited in Table 5, Note 3.

Note 4) As aforecited in Example 1.

Note 5) As aforecited in Example 1.

Note 6) As aforecited in Example 1.

(3) Preparation of coating films

With the obtained respective paints (1) and (2), the same procedure as Example 1, (3), was conducted. However, coating films satisfactory both in film appearance and film performance were not obtained as shown in Table 9. Namely, the coating film in Comparative Example 1 was poor in aluminum orientation and sag prevention effects, further, insufficient in gloss and leveling property and also inferior in film performance. This is considered to be attributable to an insufficient flow control effect of coating both in the base coat and clear coat which contained the added crosslinked polymer fine particles too little in an amount such as less than 1 part by weight and, further, deterioration of water resistance of the coating film due to a too excessive amount of polyol resin which was more than 90% by weight. Whereas it exhibited a satisfactory sag prevention effect, the coating film in Comparative Example 2 was insufficient in aluminum flake orientation, gloss, leveling property and film performance. Namely, the crosslinked polymer fine particles are added to the base coat in such an excessive amount as more than 100% by weight and, moreover, the difference of hydroxyl value between the polyol resin and the crosslinked polymer fine particles was so large as more than 160, that the base coat was deteriorated in leveling property, causing face rougheness and microscopic roughness, yielding coating films insufficient in aluminum flake orientation, gloss and leveling property. Further, the amount of the polyol resin was so small, i.e., far less than 30% by weight, both in the base coat and clear coat that the acid resistance was also deteriorated. Alternatively, whereas the film performance was satisfactory, the coating film in Comparative Example 3 was insufficient in aluminum flake orientation, gloss and leveling property. The deterioration of the film

appearance is considered to be attributable to uncontrollability of the polarity difference between the crosslinked polymer fine particles and the polyol resin, from the standpoint of synthetic process, since the used crosslinked polymer fine particles were manufactured according to the process disclosed in Japanese Patent Application Laid-open No. Sho-53-133,234.

Table 9(a)

Unit: part

| Coating system | | Example 2-coat/1-bake metallic 1 | 2 | 3 | 4 | 5 |
|---|---|---|---|---|---|---|
| Base coat | Polyol resin (OHV)r 1) | Acrylic I (80) 80 | Acrylic II (120) 60 | Acrylic II (120) 60 | Acrylic III (160) 40 | Polyester VII (80) 70 |
| | Curing agent (Mn) 2) | Cymel 303 (390) 20 | Cymel 1130 (590) 40 | Cymel 1130 (590) 40 | Cymel 1168 (530) 60 | Resimene 755 (480) 30 |
| | CPFP average particle diameter (μm) (OHV)g 3) | AA 0.058 (10) 80 | AB 0.070 (30) 40 | AB 0.070 (30) 60 | AC 0.050 (20) 30 | AD 0.050 (70) 5 |
| Clear coat | Polyol resin (OHV)r 1) | Acrylic II (120) 85 | Acrylic II (120) 60 | Acrylic II (120) 60 | Acrylic III (160) 40 | Acrylic II (120) 70 |
| | Curing agent (Mn) 2) | Cymel 303 (390) 15 | Cymel 1130 (590) 40 | Cymel 1130 (590) 40 | Cymel 1168 (530) 60 | Resimene 755 (480) 30 |
| | CPFP average particle diameter (μm) (OHV)g 3) | AF 0.053 (90) 10 | AG 0.048 (50) 10 | AG 0.048 (50) 20 | AH 0.062 (80) 25 | AH 0.062 (80) 3 |
| \|(OHV)r-(OHV)g\| | Base coat | 70 | 90 | 90 | 140 | 10 |
| | Clear coat | 30 | 70 | 70 | 80 | 40 |
| Characteristics of coating film | Al orientation 5) | Good | Good | Good | Good | Good |
| | Sag limit film thickness (μm) 6) | 47 | 46 | 52 | 54 | 46 |
| | 20° specular gloss 7) | 84 | 85 | 85 | 86 | 84 |
| | D/I value 8) | 88 | 89 | 88 | 88 | 87 |
| | Surface roughness Ra (μm) 9) | 0.07 | 0.06 | 0.07 | 0.05 | 0.07 |
| | Water resistance 10) | Good | Good | Good | Good | Good |
| | Acid resistance 11) | Good | Good | Good | Good | Good |

Table 9(b)

Unit: part

| | | Example | | Comparative Example | | |
|---|---|---|---|---|---|---|
| Coating system | | 2-coat/1-bake metallic | | 2-coat/1-bake metallic | | |
| | | 6 | 7 | 1 | 2 | 3 |
| Base coat | Polyol resin (OHV)r 1) | Polyester Ⅷ (180) 70 | Polyester Ⅷ (180) 60 | Acrylic Ⅱ (120) 95 | Polyester Ⅷ (180) 25 | Acrylic Ⅱ +V(d) 4) (120) 60 |
| | Curing agent (Mn) 2) | Resimene 755 (480) 30 | Coronate EH (710) 40 | Cymel 1130 (590) 5 | Resimene 755 (480) 75 | Cymel 1130 (590) 40 |
| | CPFP average particle diameter (μm) (OHV)g 3) | AE 0.066 (140) 10 | AE 0.066 (140) 20 | AB 0.070 (30) 0.5 | AJ 0.045 (10) 120 | V 0.200 - 40 |
| Clear coat | Polyol resin (OHV)r 1) | Acrylic Ⅲ (160) 70 | Acrylic Ⅲ (160) 65 | Acrylic Ⅱ (120) 95 | Acrylic Ⅰ (80) 25 | Acrylic Ⅱ +V(d) 4) (120) 60 |
| | Curing agent (Mn) 2) | Resimene 755 (480) 30 | Coronate EH (710) 35 | Cymel 1130 (590) 5 | Resimene 755 (480) 75 | Cymel 1130 (590) 40 |
| | CPFP average particle diameter (μm) (OHV)g 3) | AH 0.062 (80) 20 | AI 0.050 (100) 10 | AG 0.048 (50) 0.5 | AK 0.060 (80) 35 | V 0.200 - 10 |
| \|(OHV)r-(OHV)g\| | Base coat | 40 | 40 | 90 | 170 | - |
| | Clear coat | 80 | 60 | 70 | 0 | - |
| Characteristics of coating film | Al orientation 5) | Good | Good | Poor | Poor | A slightly poor |
| | Sag limit film thickness (μm) 6) | 52 | 51 | 31 | 58 | 44 |
| | 20° specular gloss 7) | 85 | 84 | 54 | 47 | 68 |
| | D/I value 8) | 87 | 87 | 63 | 52 | 71 |
| | Surface roughness Ra (μm) 9) | 0.08 | 0.06 | 0.25 | 0.27 | 0.24 |
| | Water resistance 10) | Good | Good | Poor | Good | Good |
| | Acid resistance 11) | Good | Good | Good | Poor | Good |

Note 1) Polyol resin, as aforecited in Table 5, Note 1, (OHV)r: hydroxyl value of polyol resin, and part in Table is by weight of solid matter,

Note 2) Curing agent: as aforecited in Example 1, Table 5, Note 2, (Mn): the number average molecular weight,

Note 3) Crosslinked polymer fine particle: as aforecited in Table 5, Note 3, (OHV)g: Hydroxyl value of crosslinked polymer fine particles, and part in Table is by weight of particle,

Note 4) Polyol resin V (d): auxiliary polymer prepared for modification of particles in the manufacture of crosslinked polymer fine particles V,

Note 5) Good: no unevenness is observed in orientation of aluminum pigment,

Slightly poor: a slight unevenness is observed in orientation of aluminum pigment,

Poor: an appreciable unevenness is observed in orientation of aluminum pigment,

Note 6) A maximal film thickness right before clear film started to sag,

Note 7) 20°-20° specular gloss,

Note 8) A value representing sharpness of coating film (determined with Hunterlab Dorigon Model

D47R-6F Glossmeter), the higher the D/I value, the higher the sharpness of coating film,

Note 9) A value representing the degree of roughness of coating film surface (the center-line average roughness when the portion 40 µm thick of clear coat film is measured with a cut-off value of 2.5 mm, with Surfcom 554A manufactured by Tokyo Seimitsu K.K.), the less the value, the smoother the film surface.

Note 10) After soaking the test-piece in boiling water for 3 hours, the condition of the coating film is visually evaluated.

Good: no changes of color and gloss are observed in the coating film,

Poor: changes of color and gloss are observed in the coating film,

Note 11) After dropping 0.2 ml of 0.4N-HCl solution onto coating film which is then kept at 85°C for 15 minutes, the condition of the spot mark after rinsing in water is visually inspected.

Good: No changes of color and gloss nor defects such as blister are observed,

Poor: Changes of color or gloss, or defects such as blister are observed.

(B) The case where 2 kinds or more of crosslinked polymer fine particles were used.

Examples 8~16

(1) Preparation of base coat paints

With starting material mixtures having the compositions shown in Table 10, the same procedure as Example 1, (1), was conducted and the respective base coat paints were prepared.

(2) Preparation of clear coat paints

With starting material mixtures having the compositions shown in Table 11, the same procedure as Example 1, (2), was conducted and the respective clear coat paints were prepared.

(3) Preparation of coating films

With the obtained respective paints (1) and (2), the same procedure as Example 1, (3), was conducted, whereby a leveled, brilliant coating film of excellent film appearance and film performance on the highest level was obtained in any of Examples 8~16, which was excellent in aluminum flake orientation and sag prevention effects, as shown in Table 15.

Table 10

Unit: part

| | Example | | | | | | | | |
|---|---|---|---|---|---|---|---|---|---|
| | 8 | 9 | 10 | 11 | 12 | 13 | 14 | 15 | 16 |
| Polyol resin | Acrylic VI 111.2 | Acrylic VI 101.8 | Acrylic V 95.7 | Acrylic VI 74.0 | Acrylic V 90.5 | Polyester VIII 113.0 | Acrylic V 83.8 | Acrylic IV 22.7 1) Flexorez 148 5.0 | Polyester VIII 55.8 |
| Curing agent | Cymel 1130 30.0 | Resimene 755 30.0 | Resimene 755 40.0 | Cymel 303 51.0 | Cymel 303 20.4 | Cymel 1168 30.6 | Resimene 755 40.0 | Resimene 755 60.0 | Cymel 1168 61.2 |
| Non-aq. dispersion of CPFP | BA2 41.8 | BB2 109.7 | BD2 10.7 | BA2 69.6 | BE2 71.4 | BH2 27.8 | BJ2 71.4 | BL2 101.6 | BH2 27.8 |
| | BB2 41.2 | BC2 111.4 | BE2 10.7 | BC2 69.6 | BF2 142.5 | BI2 27.6 | BQ2 27.9 | BR2 53.3 | BI2 27.6 |
| | | | | | | | | BS2 17.8 | BU2 35.7 |
| Al paste 7160N | 15.4 | 15.4 | 15.4 | 15.4 | 15.4 | 15.4 | 15.4 | 15.4 | 15.4 |
| Sulfonic acid catalyst | 1.6 | 1.6 | 1.6 | 1.6 | 1.6 | 1.6 | 1.6 | 1.6 | 1.6 |
| 10% xylene solution of Tinuvin 900 | 10.0 | 10.0 | 10.0 | 10.0 | 10.0 | 10.0 | 10.0 | 10.0 | 10.0 |
| n-Butyl alcohol | 1.0 | 1.0 | 1.0 | 1.0 | 1.0 | 1.0 | 1.0 | 1.0 | 1.0 |

Note1) Flexorez 148: Polyester/Polyol resin (non-volatile: 100%, hydroxyl value: 235, the trade name, manufactured by King Industries Co.)

Table 11

Unit: part

| | Example | | | | | | | | |
|---|---|---|---|---|---|---|---|---|---|
| | 8 | 9 | 10 | 11 | 12 | 13 | 14 | 15 | 16 |
| Polyol resin | Ac[illegible] VI | Acrylic V 47.7 | Acrylic IV 62.3 | Acrylic VI 98.2 | Acrylic V 111.8 | Acrylic VI 97.0 | Acrylic VI 80.7 | Acrylic IV 64.3 1) Flexorez 148 5.0 | Acrylic V 35.0 1) Flexorez 148 10.0 |
| Curing agent | Cymel 1130 30.0 | Resimene 755 50.0 | Resimene 755 60.0 | Cymel 303 40.8 | Cymel 303 20.4 | Cymel 1168 40.8 | Cymel 303 51.0 | Resimene 755 50.0 | Cymel 1168 61.2 |
| Non-aq. dispersion of CPFP | BC2 27.8 | BF2 89.1 | BK2 14.3 | BB2 13.7 | BF2 71.3 | BB2 21.9 | BB2 16.5 | BS2 35.5 | BD2 21.4 |
| | BG2 27.8 | BJ2 89.3 | BL2 7.1 | BG2 13.9 | BJ2 35.7 | BC2 22.3 | BC2 5.6 | BT2 17.8 | BE2 42.9 |
| | | | | | | | BG2 16.7 | | BQ2 33.5 |
| Sulfonic acid catalyst | 1.6 | 1.6 | 1.6 | 1.6 | 1.6 | 1.6 | 1.6 | 1.6 | 1.6 |
| 10% xylene solution of Tinuvin 900 | 10.0 | 10.0 | 10.0 | 10.0 | 10.0 | 10.0 | 10.0 | 10.0 | 10.0 |
| 10% xylene solution of Sanol LS-C10-440 | 10.0 | 10.0 | 10.0 | 10.0 | 10.0 | 10.0 | 10.0 | 10.0 | 10.0 |
| n-Butyl alcohol | 1.0 | 1.0 | 1.0 | 1.0 | 1.0 | 1.0 | 1.0 | 1.0 | 1.0 |
| Moda-flow | 0.5 | 0.5 | 0.5 | 0.5 | 0.5 | 0.5 | 0.5 | 0.5 | 0.5 |

Note 1) Flexorez 148: as aforecited

Example 17

(1) Preparation of base coat paint

| | |
|---|---|
| Acrylic resin solution VI obtained in Manufacturing Example VI of acrylic resin | 97.2 parts |
| Non-aqueous dispersion BA2 obtained in Manufacturing Example BA of crosslinked polymer fine particles | 27.8 " |
| Non-aqueous dispersion BG2 obtained in Manufacturing Example BG of crosslinked polymer fine particles | 13.9 " |
| Aluminum Paste 7160N (as aforecited in Example 1) | 15.4 " |
| 10% xylene solution of Tinuvin 900 (as aforecited in Example 1) | 10.0 " |

A base coat paint was prepared, immediately before coating, by admixing a coating composition having the above formulation with 40.0 parts of Coronate EH (the trade name of hexamethylene diisocyanate trimer manufactured by Nippon Polyurethane Industry Co., Ltd., 100% non-volatile, 21% isocyanate group content) and diluting to a coating viscosity (14 seconds at 20°C with Ford cup No. 4) with a thinner (toluene/xylene/n-butyl acetate = 4/4/2 by weight).

(2) Preparation of clear coat paint

| | |
|---|---|
| Acrylic resin solution IV obtained in Manufacturing Example IV of acrylic resin | 98.5 parts |
| Non-aqueous dispersion BK2 obtained in Manufacturing Example BK of crosslinked polymer fine particles | 3.6 " |
| Non-aqueous dispersion BL2 obtained in Manufacturing Example BL of crosslinked polymer fine particles | 3.5 " |
| 10% xylene solution of Tinuvin 900 (as aforecited in Example 1) | 10.0 " |
| 10% xylene solution of Sanol LS-C10-440 | 10.0 " |
| Moda-flow (as aforecited in Example 1) | 0.5 " |

A clear coat paint was prepared immediately before coating, by admixing a mixture having the above formulation with 40.0 parts of Coronate EH (as aforecited in paragraph (1) above) and diluting to a coating viscosity (25 seconds at 20°C with Ford cup No. 4) with a thinner (xylene/n-butyl acetate = 5/5 by weight).

(3) Preparation of coating film

With the obtained respective paints (1) and (2), the same procedure as Example 1, (3), was conducted, whereby a leveled, brilliant coating film of excellent film appearance and film performance on the highest level was obtained, which was excellent in aluminum flake orientation and sag prevention effects, as shown in Table 15.

Examples 18 and 19

(1) Preparation of base coat paints

Starting material mixtures having the composition shown in Table 12 excepting the melamine resin were fed into a paint shaker and dispersed until the particle size became 10 µm or less. Then, after adding the melamine resin shown in Table 12, the same procedure as Example 1, (1), was conducted to prepare respective diluted base coat paints.

(2) Preparation of clear coat paints

The clear coat paint obtained in Example 8, (2), and the clear coat paint obtained in Example 11, (2), were used as they were, in Examples 18 and 19, respectively.

(3) Preparation of coating films

With the obtained respective paints (1) and (2), the same procedure as Example 1, (3), was conducted, whereby a leveled, brilliant coating film of excellent film appearance and film performance on the highest level was obtained in either case of Examples 18 and 19, which was excellent in sag prevention effect, as shown in Table 15.

Table 12

Unit: part

| Example | 18 | 19 |
|---|---|---|
| Polyol resin | Acrylic VI 111.2 | Acrylic VI 74.0 |
| Curing agent | Cymel 1130 30.0 | Cymel 303 51.0 |
| Non-aq. dispersion of CPFP | BA2 41.8 | BA2 69.6 |
| | BB2 41.2 | BC2 69.6 |
| Quinacridone 1) | 46.8 | 54.0 |
| Red iron oxide 2) | 5.2 | 6.0 |
| Sulfonic acid catalyst | 1.6 | 1.6 |
| 10% xylene solution of Tinuvin 900 | 10.0 | 10.0 |
| n-Butyl alcohol | 2.0 | 2.0 |
| Xylene | 8.0 | 8.0 |

Note 1) Rubicron Red 500RG (the trade name of quinacridone, manufactured by Tosoh Corporation)

Note 2) KN-R (the trade name of red iron oxide, manufactured by Toda Kogyo Corporation)

Examples 20 and 21

(1) Preparation of coatings

Starting material mixtures having the composition shown in Table 13 excepting the melamine resin were fed into a sand mill and dispersed for 30 minutes until the particle size became 10 µm or less. Then, the melamine resin shown in Table 13 was admixed, to prepare respective coatings which were then diluted to

a coating viscosity (25 seconds at 20 °C with Ford cup No. 4) with a thinner (xylene/n-butyl alcohol = 9/1 by weight).

(2) Preparation of coating films

A test sheet coated in the same manner as Example 1, (3) with an electrocoated film and a sealer, was air-spray-coated with the above coatings and baked at 140 °C for 30 minutes in a vertical position. Thus, a leveled, brilliant coating film of excellent appearance and high film performance was obtained which was excellent in sag prevention effect.

Table 13

Unit: part

| Example | 20 | 21 |
|---|---|---|
| Polyol resin | Acrylic IV 105.2 | Polyester VIII 95.3 |
| Curing agent | Cymel 303 30.6 | Cymel 1168 40.8 |
| Non-aq. dispersion of CPFP | BR2 28.4 | BH2 2.8 |
| | BT2 28.4 | BI2 13.8 |
| | | BU2 17.9 |
| Rutile titanium dioxide 1) | 70.0 | 70.0 |
| Sulfonic acid catalyst | 1.6 | 1.6 |
| n-Butyl alcohol | 12.0 | 12.0 |
| Moda-flow | 0.5 | 0.5 |

Note 1) Teika JR-602: the trade name of titanium dioxide, manufactured by Teikoku Kako Co., Ltd.

Comparative Examples 4 and 5

(1) Preparation of base coat paints

With starting material mixtures having the compositions shown in Table 14, the same procedure as Example 1, (1), was conducted, and the respective base coat paints were prepared.

(2) Preparation of clear coat paints

With starting material mixtures having the compositions shown in Table 14, the same procedure as Example 1, (2), was conducted, and the respective clear coat paints were prepared.

(3) Preparation of coating films

With the obtained paints (1) and (2), the same procedure as Example 1, (3), was conducted. However, coating films satisfactory both in film appearance and film performance were not obtained as shown in Table 15.

Namely, the coating film in Comparative Example 4 was poor in aluminum flake orientation and sag prevention effects, further, insufficient in gloss and leveling property and also inferior in film performance. This is considered to be attributable to an insufficient flow control effect of coating (poor in aluminum flake orientation and small in sag limit film thickness) both in the base coat and clear coat which contained the added crosslinked polymer fine particles in an amount of less than 1 part by weight and, further, deterioration of gloss (20° specular gloss and D/I value) as well as leveling property (surface roughness) due to the difference of hydroxyl value in excess of 160 between the polyol resin and crosslinked polymer fine particles in the base coat and, moreover, due to the difference x of hydroxyl value also in excess of 120 in all the crosslinked polymer fine particles in the base coat. Further, since both the base coat and the clear coat contained the polyol in an amount of less than 30% by weight, these were also inferior in acid resistance.

Alternatively, in Comparative Example 5 according to the process disclosed in Japanese Patent Application Laid-open No. Hei-1-172,464, the obtained coating film was insufficient both in gloss (20° specular gloss and D/I value) and leveling property (surface roughness). This is considered to be attributable to difficulty in strict control of polarity difference between the polyol resin and crosslinked polymer fine particles due to ionic groups other than the hydroxyl group present on the particle surfaces of the employed crosslinked polymer fine particles N2, O2 and P2, which resulted in a poor film appearance.

Table 14

Unit: part

| | Comparative Example | | | |
|---|---|---|---|---|
| | 4 | | 5 | |
| | Base coat | Clear coat | Base coat | Clear coat |
| Polyol resin | Polyester VIII 33.2 | Acrylic V 41.4 | Acrylic V 90.5 | Acrylic V 111.8 |
| Curing agent | Resimene 755 80.0 | Resimene 755 75.0 | Cymel 303 20.4 | Cymel 303 20.4 |
| Non-aq. dispersion of CPFP | BI2 1.7 | BF2 0.7 | N2 71.0 | O2 70.9 |
| | BM2 0.6 | BJ2 0.7 | O2 141.8 | P2 35.5 |
| Al paste 7160N | 15.4 | | 15.4 | |
| Sulfonic acid catalyst | 1.6 | 1.6 | 1.6 | 1.6 |
| 10% xylene solution of Tinuvin 900 | 10.0 | 10.0 | 10.0 | 10.0 |
| 10% xylene solution of Sanol LS-C10-440 | | 10.0 | | 10.0 |
| n-Butyl alcohol | 1.0 | 1.0 | 1.0 | 1.0 |
| Moda-flow | | 0.5 | | 0.5 |

Table 15(a)-1

Unit: part

| Coating system | | Example | | | | |
|---|---|---|---|---|---|---|
| | | 2-coat/1-bake metallic | | | | |
| | | 8 | 9 | 10 | 11 | 12 |
| Base coat | Polyol resin 1)<br>(OHV)r | Acrylic VI<br>(160)<br>70 | Acrylic VI<br>(160)<br>70 | Acrylic V<br>(120)<br>60 | Acrylic VI<br>(160)<br>50 | Acrylic V<br>(120)<br>80 |
| | Curing agent 2)<br>($\overline{Mn}$) | Cymel 1130<br>(590)<br>30 | Resimene 755<br>(480)<br>30 | Resimene 755<br>(480)<br>40 | Cymel 303<br>(390)<br>50 | Cymel 303<br>(390)<br>20 |
| | CPFP 3)<br>Average particle diameter (µm) 4)<br>$(OHV)g_1$ | BA<br>0.055<br>(10)<br>15 | BB<br>0.065<br>(90)<br>40 | BD<br>0.060<br>(105)<br>3 | BA<br>0.055<br>(10)<br>25 | BE<br>0.066<br>(120)<br>20 |
| | CPFP 3)<br>Average particle diameter (µm) 4)<br>$(OHV)g_2$ | BB<br>0.065<br>(90)<br>15 | BC<br>0.065<br>(120)<br>40 | BE<br>0.066<br>(120)<br>3 | BC<br>0.065<br>(120)<br>25 | BF<br>0.052<br>(45)<br>40 |
| | CPFP 3)<br>Average particle diameter (µm) 4)<br>$(OHV)g_3$ | - | - | - | - | - |
| Clear coat | Polyol resin 1)<br>(OHV)r | Acryli VI<br>(160)<br>70 | Acrylic V<br>(120)<br>50 | Acrylic IV<br>(80)<br>40 | Acrylic VI<br>(160)<br>50 | Acrylic V<br>(120)<br>80 |
| | Curing agent 2)<br>($\overline{Mn}$) | Cymel 1130<br>(590)<br>30 | Resimene 755<br>(480)<br>30 | Resimene 755<br>(480)<br>60 | Cymel 303<br>(390)<br>40 | Cymel 303<br>(390)<br>20 |
| | CPFP 3)<br>Average particle diameter (µm) 4)<br>$(OHV)g_1$ | BC<br>0.065<br>(120)<br>10 | BF<br>0.052<br>(45)<br>25 | BK<br>0.066<br>(50)<br>4 | BB<br>0.065<br>(90)<br>5 | BF<br>0.052<br>(45)<br>20 |
| | CPFP 3)<br>Average particle diameter (µm) 4)<br>$(OHV)g_2$ | BG<br>0.057<br>(70)<br>10 | BJ<br>0.058<br>(60)<br>25 | BL<br>0.066<br>(60)<br>2 | BG<br>0.057<br>(70)<br>5 | BJ<br>0.058<br>(60)<br>10 |
| | CPFP 3)<br>Average particle diameter (µm) 4)<br>$(OHV)g_3$ | - | - | - | - | - |

Table 15(a)-2

Unit: part

| | | | Example | | | | |
|---|---|---|---|---|---|---|---|
| Coating system | | | 2-coat/1-bake metallic | | | | |
| | | | 8 | 9 | 10 | 11 | 12 |
| \|(OHV)r-(OHV)g\| | | Base coat | 150/70 | 70/40 | 15/0 | 150/40 | 0/75 |
| | | Clear coat | 40/90 | 75/60 | 30/20 | 70/90 | 75/60 |
| Difference x between max. and min. values of (OHV)g in all the CPFP | | Base coat | 80 | 30 | 15 | 110 | 75 |
| | | Clear coat | 50 | 15 | 10 | 20 | 15 |
| Characteristics of coating film 5) | Al orientation | | Good | Good | Good | Good | Good |
| | Sag limit film thickness (μm) | | 53 | 53 | 46 | 48 | 57 |
| | 20° specular gloss | | 88 | 86 | 89 | 87 | 87 |
| | D/I value | | 90 | 89 | 88 | 90 | 89 |
| | Surface roughness Ra (μm) | | 0.03 | 0.04 | 0.04 | 0.03 | 0.03 |
| | Water resistance | | Good | Good | Good | Good | Good |
| | Acid resistance | | Good | Good | Good | Good | Good |

1)~3) and 5): as aforecited in Table 9, footnotes
4) as aforecited in Table 3, Note 6; average particle diameter after conversion to non-aq. system

Table 15(b)-1

Unit: part

| Coating system | | Example | | | | |
|---|---|---|---|---|---|---|
| | | 2-coat/1-bake metallic | | | | |
| | | 13 | 14 | 15 | 16 | 17 |
| Base coat | Polyol resin 1) (OHV)r | Acrylic VIII (180) 70 | Acrylic V (120) 60 | Acrylic IV+Flexorez (99) 40 | Polyester VIII (180) 40 | Acrylic VI (160) 60 |
| | Curing agent 2) ($\overline{Mn}$) | Cymel 1168 (530) 30 | Resimene 755 (480) 40 | Resimene 755 (480) 60 | Cymel 1168 (530) 60 | Coronate EH (710) 40 |
| | CPFP 3) Average particle diameter (μm) 4) (OHV)$g_1$ | BH 0.049 (20) 10 | BJ 0.058 (60) 20 | BL 0.066 (60) 30 | BH 0.049 (20) 10 | BA 0.055 (10) 10 |
| | CPFP 3) Average particle diameter (μm) 4) (OHV)$g_2$ | BI 0.053 (140) 10 | BQ 0.046 (160) 10 | BR 0.059 (180) 15 | BI 0.053 (140) 10 | BG 0.057 (70) 5 |
| | CPFP 3) Average particle diameter (μm) 4) (OHV)$g_3$ | - | - | BS 0.064 (150) 5 | BU 0.063 (100) 10 | - |
| Clear coat | Polyol resin 1) (OHV)r | Acrylic VI (160) 60 | Acrylic VI (160) 50 | Acrylic IV+Flexorez (96) 50 | Acrylic V+Flexorez (149) 40 | Acrylic IV (80) 60 |
| | Curing agent 2) ($\overline{Mn}$) | Cymel 1168 (530) 40 | Cymel 303 (390) 50 | Resimene 755 (480) 50 | Cymel 1168 (530) 60 | Coronate EH (710) 40 |
| | CPFP 3) Average particle diameter (μm) 4) (OHV)$g_1$ | BH 0.065 (90) 8 | BB 0.065 (90) 6 | BS 0.064 (150) 10 | BD 0.060 (105) 6 | BK 0.066 (50) 1 |
| | CPFP 3) Average particle diameter (μm) 4) (OHV)$g_2$ | BC 0.065 (120) 8 | BC 0.065 (120) 2 | BT 0.060 (175) 5 | BE 0.066 (12) 12 | BL 0.066 (60) 1 |
| | CPFP 3) Average particle diameter (μm) 4) (OHV)$g_3$ | - | BG 0.057 (70) 6 | - | BQ 0.046 (160) 12 | - |

Table 15(b)-2

Unit: part

| | | | Example | | | | |
|---|---|---|---|---|---|---|---|
| Coating system | | | 2-coat/1-bake metallic | | | | |
| | | | 13 | 14 | 15 | 16 | 17 |
| $\lvert(OHV)r-(OHV)g\rvert$ | | Base coat | 160/40 | 60/40 | 39/81/51 | 160/40/80 | 150/90 |
| | | Clear coat | 70/40 | 70/40 | 54/79 | 44/29/11 | 30/20 |
| Difference x between max. and min. values of (OHV)g in all the CPFP | | Base coat | 120 | 100 | 120 | 120 | 60 |
| | | Clear coat | 30 | 50 | 25 | 55 | 10 |
| Characteristics of coating film 5) | Al orientation | | Good | Good | Good | Good | Good |
| | Sag limit film thickness (µm) | | 55 | 55 | 59 | 59 | 48 |
| | 20° specular gloss | | 86 | 91 | 90 | 90 | 90 |
| | D/I value | | 90 | 91 | 88 | 89 | 90 |
| | Surface roughness Ra (µm) | | 0.03 | 0.04 | 0.05 | 0.05 | 0.03 |
| | Water resistance | | Good | Good | Good | Good | Good |
| | Acid resistance | | Good | Good | Good | Good | Good |

Table 15(c)-1

Unit: part

| | | Example | | | | Comparative Example | |
|---|---|---|---|---|---|---|---|
| Coating system | | 2-coat/1-bake solid | | 1-coat solid | | 2-coat/1-bake metallic | |
| | | 18 | 19 | 20 | 21 | 4 | 5 |
| Base coat | Polyol resin 1) (OHV)r | Acrylic VI (160) 70 | Acrylic VI (160) 50 | Acrylic IV (80) 70 | Polyester VIII (180) 60 | Polyester VIII (180) 20 | Acrylic V (120) 80 |
| | Curing agent 2) ($\overline{Mn}$) | Cymel 1130 (590) 30 | Cymel 303 (390) 50 | Cymel 303 (390) 30 | Cymel 1168 (530) 40 | Resimene 755 (480) 80 | Cymel 303 (390) 20 |
| | CPFP 3) Average particle diameter (μm) 4) (OHV)$g_1$ | BA 0.055 (10) 15 | BA 0.055 (10) 25 | BR 0.059 (180) 8 | BH 0.049 (20) 1 | BI 0.053 (140) 0.6 | N 0.067 (120) 20 |
| | CPFP 3) Average particle diameter (μm) 4) (OHV)$g_2$ | BB 0.065 (90) 15 | BC 0.065 (120) 25 | BT 0.060 (175) 8 | BI 0.053 (140) 5 | BM 0.055 (0) 0.2 | O 0.055 (45) 40 |
| | CPFP 3) Average particle diameter (μm) 4) (OHV)$g_3$ | - | - | - | BU 0.063 (100) 5 | - | - |
| Clear coat | Polyol resin 1) (OHV)r | Acrylic VI (160) 70 | Acrylic VI (160) 60 | | | Acrylic V (120) 25 | Acrylic V (120) 80 |
| | Curing agent 2) ($\overline{Mn}$) | Cymel 1130 (590) 30 | Cymel 303 (390) 40 | | | Resimene 755 (480) 75 | Cymel 303 (390) 20 |
| | CPFP 3) Average particle diameter (μm) 4) (OHV)$g_1$ | BC 0.065 (120) 10 | BB 0.065 (90) 5 | | | BF 0.052 (45) 0.2 | O 0.055 (45) 20 |
| | CPFP 3) Average particle diameter (μm) 4) (OHV)$g_2$ | BG 0.057 (70) 10 | BG 0.057 (70) 5 | | | BJ 0.058 (60) 0.2 | P 0.058 (60) 10 |
| | CPFP 3) Average particle diameter (μm) 4) (OHV)$g_3$ | - | - | | | - | - |

Table 15(c)-2

Unit: part

| | | | Example | | | | Comparative Example | |
|---|---|---|---|---|---|---|---|---|
| Coating system | | | 2-coat/1-baKe solid | | 1-coat solid | | 2-coat/1-baKe metallic | |
| | | | 18 | 19 | 20 | 21 | 4 | 5 |
| \|(OHV)r-(OHV)g\| | | Base coat | 150/70 | 150/40 | 100/95 | 160/40/80 | 40/180 | 0/75 |
| | | Clear coat | 40/90 | 70/90 | | | 75/60 | 75/60 |
| Difference x between max. and min. values of (OHV)g in all the CPFP | | Base coat | 80 | 110 | 5 | 120 | 140 | 75 |
| | | Clear coat | 50 | 20 | | | 15 | 15 |
| Characteristics of coating film 5) | Al orientation | | - | - | - | - | Poor | Good |
| | Sag limit film thickness (μm) | | 53 | 49 | 50 | 47 | 30 | 57 |
| | 20° specular gloss | | 87 | 86 | 84 | 84 | 35 | 70 |
| | D/I value | | 88 | 89 | 85 | 87 | 50 | 67 |
| | Surface roughness Ra (μm) | | 0.03 | 0.03 | 0.07 | 0.07 | 0.25 | 0.15 |
| | Water resistance | | Good | Good | Good | Good | Good | Good |
| | Acid resistance | | Good | Good | Good | Good | Poor | Good |

Manufacture of acrylic resins

Manufacturing Examples A~F

The same procedure as Manufacturing Example I~VI was conducted except that the dropping components described in Table 16 were used and acrylic resin solutions A~F each having the characteristics shown in Table 16 were obtained.

Table 16

Unit part

| Acrylic resin | | A | B | C | D | E | F |
|---|---|---|---|---|---|---|---|
| Added components | Methyl methacrylate | 34.2 | 45.8 | 53.7 | 0.8 | 23.3 | 36.0 |
| | 2-Ethylhexyl acrylate | 35.3 | 23.7 | 15.8 | 48.6 | 26.1 | 13.4 |
| | 2-Hydroxyethyl acrylate | 27.0 | 27.0 | 27.0 | 19.3 | 19.3 | 19.3 |
| | Placcel FM-3 1) | | | | 29.7 | 29.7 | 29.7 |
| | Acrylic acid | 0.6 | 0.6 | 0.6 | 0.6 | 0.6 | 0.6 |
| | t-Butyl peroxybenzoate | 2.9 | 2.9 | 2.9 | 1.0 | 1.0 | 1.0 |
| Hydroxyl value | | 120 | 120 | 120 | 120 | 120 | 120 |
| Non-volatile (%) | | 60 | 60 | 60 | 60 | 60 | 60 |
| Weight-average molecular weight 2) | | 7800 | 8100 | 7700 | 13000 | 15000 | 16000 |
| Acid value | | 5 | 5 | 5 | 5 | 5 | 5 |
| Glass transition temp. (°C) 3) | | -5 | 20 | 40 | -50 | -15 | 10 |

Note 1) Placcel FM3: the trade name of a monomer of 2-hydroxyethyl methacrylate added with 3 moles of ε-caprolactone, manufactured by Daicel Chemical Industries, ltd.

Note 2) as aforecited in Table 1, Note 2.

Note 3) a value calculated by the following equation:

$$1/Tg(°K) = W_A/Tg_A + W_B/Tg_B \text{ --- } W_N/Tg_N$$

where, $W_N$ : percentage by weight of each monomer, and

$Tg_N$: glass transition temperature of homopolymer of each monomer.

Manufacture of crosslinked polymer fine particles

Manufacturing Examples CE~HE

The same procedure as Manufacturing Example BE of crosslinked polymer fine particles was conducted except that each of acrylic resin solutions A, B, C, D, E and F was used as a particle dispersion stabilizing resin, in lieu of the acrylic resin solution V, whereby crosslinked polymer fine particle non-aqueous dispersions CE2~HE2 having the characteristics shown in Table 17 were obtained.

Manufacturing Examples CF~HF

The same procedure as Manufacturing Example BF of crosslinked polymer fine particles was conducted except that each of acrylic resin solutions A, B, C, D, E and F was used as a particle dispersion stabilizing resin, in lieu of the acrylic resin solution V, whereby crosslinked polymer fine particle non-aqueous dispersions CF2~HF2 having the characteristics shown in Table 18 were obtained.

Manufacturing Examples CJ~HJ

The same procedure as Manufacturing Example BJ of crosslinked polymer fine particles was conducted except that each of acrylic resin solutions A, B, C, D, E and F was used as a particle dispersion stabilizing resin, in lieu of the acrylic resin solution V, whereby crosslinked polymer fine particle non-aqueous dispersions CJ~HJ having the characteristics shown in Table 19 were obtained.

Table 17

| Non-aq. dispersion | CE2 | DE2 | EE2 | FE2 | GE2 | HE2 |
|---|---|---|---|---|---|---|
| Acrylic resin solution | A | B | C | D | E | F |
| Non-volatile (%) | 40.1 | 39.8 | 40.3 | 40.2 | 40.4 | 39.9 |
| Viscosity (cps) | 297 | 331 | 343 | 277 | 283 | 315 |
| Average particle diameter (μm) | 0.063 | 0.068 | 0.065 | 0.067 | 0.066 | 0.064 |
| Water content (%) | 0.2 | 0.3 | 0.3 | 0.2 | 0.3 | 0.3 |

Table 18

| Non-aq. dispersion | CF2 | DF2 | EF2 | FF2 | GF2 | HF2 |
|---|---|---|---|---|---|---|
| Acrylic resin solution | A | B | C | D | E | F |
| Non-volatile (%) | 40.0 | 40.4 | 40.3 | 40.2 | 39.9 | 39.8 |
| Viscosity (cps) | 260 | 268 | 288 | 243 | 252 | 265 |
| Average particle diameter (μm) | 0.051 | 0.055 | 0.053 | 0.053 | 0.051 | 0.052 |
| Water content (%) | 0.3 | 0.3 | 0.2 | 0.3 | 0.2 | 0.3 |

Table 19

| Non-aq. dispersion | CJ2 | DJ2 | EJ2 | FJ2 | GJ2 | HJ2 |
|---|---|---|---|---|---|---|
| Acrylic resin solution | A | B | C | D | E | F |
| Non-volatile (%) | 39.9 | 40.1 | 40.0 | 40.3 | 39.8 | 40.2 |
| Viscosity (cps) | 220 | 245 | 273 | 198 | 211 | 233 |
| Average particle diameter (μm) | 0.058 | 0.059 | 0.055 | 0.058 | 0.056 | 0.055 |
| Water content (%) | 0.3 | 0.2 | 0.3 | 0.3 | 0.3 | 0.2 |

Examples 22~25 and Comparative Example 6

(1) Preparation of base coat paints

With mixtures of the starting materials shown in Table 20, the same procedure as Example 1, (1), was conducted, and the respective base coat paints were prepared.

(2) Preparation of clear coat paints

With mixtures of the starting materials shown in Table 21, the same procedure as Example 1, (2), was conducted, and the respective clear coat paints were prepared.

(3) preparation of coating films

With the obtained paints (1) and (2), the same procedure as Example 1, (3), was conducted. In all of Examples 22~25 and Comparative Example 6, since the crosslinked polymer fine particles were used in an adequate amount, the leveled, brilliant coating films of excellent appearance shown in Table 22 were obtained, which were excellent in aluminum flake orientation and sag prevention effects.

Alternatively, with respect of adhesion at base coat/clear coat interface in Examples 22~25, since the acrylic resin having an adequate Tg was used for both the base coat and clear coat, an excellent film adhesion was exhibited. In contrast, in Comparative Example 6, since the Tg of the acrylic resin for the base coat was higher than that of the acrylic resin for the clear coat within the range of the process disclosed in U.S. Patent No. 4,276,212, the film adhesion was poor.

Table 20

Unit: part

| | Example | | | | Comparative Example |
|---|---|---|---|---|---|
| | 22 | 23 | 24 | 25 | 6 |
| Polyol resin | Acrylic A 90.5 | Acrylic B 90.5 | Acrylic D 90.5 | Acrylic E 90.5 | Acrylic B 90.5 |
| Curing agent | Cymel 303 20.4 | Cymel 303 20.4 | Cymel 303 20.4 | Cymel 303 20.4 | Cymel 303 20.4 |
| Non-aq. dispersion of CPFP | CE2 71.4 | DE2 71.4 | FE2 71.4 | GE2 71.4 | DE2 71.4 |
| Non-aq. dispersion of CPFP | CF2 142.5 | DF2 142.5 | FF2 142.5 | GF2 142.5 | DF2 142.5 |
| Al paste 7160N | 15.4 | 15.4 | 15.4 | 15.4 | 15.4 |
| Sulfonic acid catalyst | 1.6 | 1.6 | 1.6 | 1.6 | 1.6 |
| 10% xylene solution of Tinuvin 900 | 10.0 | 10.0 | 10.0 | 10.0 | 10.0 |
| n-Butyl alcohol | 1.0 | 1.0 | 1.0 | 1.0 | 1.0 |

Table 21

Unit: part

| | Example | | | | Comparative Example |
|---|---|---|---|---|---|
| | 22 | 23 | 24 | 25 | 6 |
| Polyol resin | Acrylic B 111.8 | Acrylic C 111.8 | Acrylic E 111.8 | Acrylic F 111.8 | Acrylic E 111.8 |
| Curing agent | Cymel 303 20.4 | Cymel 303 20.4 | Cymel 303 20.4 | Cymel 303 20.4 | Cymel 303 20.4 |
| Non-aq. dispersion of CPFP | DF2 71.3 | EF2 71.3 | GF2 71.3 | HF2 71.3 | GF2 71.3 |
| Non-aq. dispersion of CPFP | DJ2 35.7 | EJ2 35.7 | GJ2 35.7 | HJ2 35.7 | GJ2 35.7 |
| Sulfonic acid catalyst | 1.6 | 1.6 | 1.6 | 1.6 | 1.6 |
| 10% xylene solution of Tinuvin 900 | 10.0 | 10.0 | 10.0 | 10.0 | 10.0 |
| 10% xylene solution of Sanol LS-C10-440 | 10.0 | 10.0 | 10.0 | 10.0 | 10.0 |
| n-Butyl alcohol | 1.0 | 1.0 | 1.0 | 1.0 | 1.0 |
| Moda-flow | 0.5 | 0.5 | 0.5 | 0.5 | 0.5 |

Table 22

Unit: part

| | | | Example | | | | Comparative Example |
|---|---|---|---|---|---|---|---|
| Coating system | | | 2-coat/1-bake metallic | | | | |
| | | | 22 | 23 | 24 | 25 | 6 |
| Base coat | Polyol resin (OHV)r Tg | 1) | Acrylic A (120) -5°C 80 | Acrylic B (120) 20°C 80 | Acrylic D (120) -50°C 80 | Acrylic E (120) -15°C 80 | Acrylic B (120) 20°C 80 |
| | Curing agent ($\overline{Mn}$) | 2) | Cymel 303 (390) 20 | Cymel 303 (390) 20 | Cymel 303 (390) 20 | Cymel 303 (390) 20 | Cymel 303 (390) 20 |
| | CPFP (OHV)$g_1$ | 3) | CE (120) 20 | DE (120) 20 | FE (120) 20 | GE (120) 20 | DE (120) 20 |
| | CPFP (OHV)$g_2$ | 3) | CF (45) 40 | DF (45) 40 | FF (45) 40 | GF (45) 40 | DF (45) 40 |
| Clear coat | Polyol resin (OHV)r Tg | 1) | Acrylic B (120) 20°C 80 | Acrylic C (120) 40°C 80 | Acrylic E (120) -50°C 80 | Acrylic F (120) 10°C 80 | Acrylic E (120) -15°C 80 |
| | Curing agent ($\overline{Mn}$) | 2) | Cymel 303 (390) 20 | Cymel 303 (390) 20 | Cymel 303 (390) 20 | Cymel 303 (390) 20 | Cymel 303 (390) 20 |
| | CPFP (OHV)$g_1$ | 3) | DF (45) 20 | EF (45) 20 | GF (45) 20 | HF (45) 20 | GF (45) 20 |
| | CPFP (OHV)$g_2$ | 3) | DJ (60) 10 | EJ (60) 10 | GJ (60) 10 | HJ (60) 10 | GJ (60) 10 |
| Characteristics of coating film | Al orientation | 4) | Good | Good | Good | Good | Good |
| | Sag limit film thickness (μm) | 5) | 56 | 57 | 52 | 53 | 51 |
| | 20° specular gloss | 6) | 87 | 86 | 86 | 87 | 85 |
| | Surface roughness Ra (μm) | 7) | 0.03 | 0.03 | 0.04 | 0.03 | 0.04 |
| | Water resistance | 8) | Good | Good | Good | Good | Good |
| | Acid resistance | 9) | Good | Good | Good | Good | Good |
| | Adhesion | 10) | Good | Good | Good | Good | Poor |

Note 1)~Note 9) as aforecited in Table 9, foot-note,

Note 10) Evaluation of adhesion:

Eleven parallel cross-cut lines at 1 or 2 mm spaces with a depth to reach the substrate were drawn with a knife to form square chequers on the coating films. A cellophane adhesive tape was adhered closedly onto the chequers. Stripped-off conditions of the coating films were observed, when the adhesive tape was peeled off upwards.

Good: no stripping was observed at any square chequers,

Poor: stripping was observed at base coat/clear coat interface in half or more of the square chequers.

## Claims

1. A high solids coating composition comprising: 100 parts by weight of a resinous solid matter mixture comprising 30~90% by weight of a polyol resin and 10~70% by weight of a curing agent capable to react with hydroxyl groups and characterised by comprising 1~100 parts by weight of crosslinked polymer fine particles of a 0.001~1.0 $\mu$m average particle diameter, the crosslinked polymer fine particles having only hydroxyl groups as a reactive functional group on the surface of the particles, wherein a difference in hydroxyl value between said crosslinked polymer fine particles and said polyol resin is within the range defined by the following inequality:

   $0 \leqq |(OHV)r - (OHV)g| \leqq 160$,

   wherein (OHV)g and (OHV)r are hydroxyl values of crosslinked polymer fine particles and polyol resin, respectively.

2. The coating composition according to claim 1, to be used for a clear coat, wherein the difference in hydroxyl value is within the range defined by the following inequality:

   $0 \leqq |(OHV)r - (OHV)g| \leqq 100$,

   wherein (OHV)g and (OHV)r are hydroxyl values of crosslinked polymer fine particles and polyol resin, respectively.

3. The coating composition according to claim 1, wherein the crosslinked polymer fine particles consist of at least two different kinds of crosslinked polymer fine particles and a difference (x) between maximum

and minimum hydroxyl values in all the crosslinked polymer fine particles is within the range defined by the following inequality:

$0 < x \leqq 120.$

4. The coating composition according to claim 3, wherein the different kinds of crosslinked polymer fine particles are contained each in an amount of at least 10% by weight based on the total crosslinked polymer fine particles and the difference (x) is within the range defined by the following inequality:

$10 \leqq x \leqq 120$

5. The coating composition according to claim 4, to be used for a clear coat, wherein the crosslinked polymer fine particles are contained in a total amount of 1~60 parts by weight and the difference (x) is within the range defined by the following inequality:

$10 \leqq x \leqq 60.$

6. The coating composition according to claim 1, wherein the crosslinked polymer fine particles are obtained by the process comprising the steps of:
① emulsion polymerizing or core/shell type emulsion polymerizing the following components:
(a) an $\alpha,\beta$-ethylenically unsaturated monomer containing a hydroxyl group,
(b) a polyfunctional $\alpha,\beta$-ethylenically unsaturated monomer, and
(c) an $\alpha,\beta$-ethylenically unsaturated monomer other than the above (a) and (b),
by using a water-soluble polymerization initiator, in a soap-free system or in the presence of a surface active agent containing an ester group; adding an organic solvent to a resultant polymer aqueous dispersion; and then adding a basic compound catalyst or an acidic compound catalyst thereto to hydrolyze completely said ester group-containing surface active agent and water-soluble polymerization initiator at a temperature not exceeding 95 °C as in the state of suspension;
② adding an acidic compound or basic compound to said suspension to neutralize said basic compound catalyst or acidic compound catalyst; then after adding a dispersion stabilizing resin, further adding an amine salt of an organic acid, followed by leaving a system of said suspension to stand to separate into two layers, an organic layer and a water layer; after removing the water layer, washing the organic layer by adding water; adding an amine salt of an organic acid, followed by standing to separate; and removing the water layer; and
③ removing residual water in the organic layer.

7. The high solids coating composition according to claim 6, wherein the crosslinked polymer fine particles are obtained by the emulsion polymerization in the step ① and have a hydroxyl value representing a hydroxyl value of the whole portion of the particle.

8. The high solids coating composition according to claim 6, wherein the crosslinked polymer fine particles are obtained by the core/shell type emulsion polymerization in the step ① and have a hydroxyl value representing a hydroxyl value of a shell portion of the particle.

9. The high solids coating composition according to claim 1, wherein the polyol resin comprises an acrylic resin having characteristics of a weight-average molecular weight ranging 3,000~40,000, a hydroxyl value ranging 30~250, an acid value of not exceeding 30 and a glass transition temperature ranging -60~50 °C.

10. The high solids coating composition according to claim 9, to be used for a clear coat, wherein the weight-average molecular weight ranges 3,000~15,000, the hydroxyl value ranges 50~250 and the glass transition temperature ranges 20~50 °C.

11. The high solids coating composition according to claim 9, to be used for a clear coat, wherein the weight-average molecular weight ranges 4,000~40,000, the hydroxyl value ranges 30~200 and the glass transition temperature ranges -20~19 °C.

12. The high solids coating composition according to claim 9, to be used for a base coat, wherein the weight-average molecular weight ranges 3,000~15,000, the hydroxyl value ranges 50~250 and the glass transition temperature ranges -10~20 ° C.

13. The high solids coating composition according to claim 9, to be used for a base coat, wherein the weight-average molecular weight ranges 4,000~40,000, the hydroxyl value ranges 30~200 and the glass transition temperature ranges -60~-11 ° C.

14. A coated article comprising a substrate and a coating film of a coating composition coated thereon, wherein said coating composition comprises: 100 parts by weight of a resinous solid matter mixture comprising 30~90% by weight of a polyol resin and 10~70% by weight of a curing agent capable to react with hydroxyl groups; and characterised by comprising 1~100 parts by weight of crosslinked polymer fine particles of a 0.001~1.0 µm average particle diameter, the crosslinked polymer fine particles having only hydroxyl groups as a reactive functional group on the surface of the particles, said coating composition having a difference in hydroxyl value between said crosslinked polymer fine particles and said polyol resin within the range defined by the following inequality:

$$0 \leqq | (OHV)r - (OHV)g | \leqq 160,$$

wherein (OHV)g and (OHV)r are hydroxyl values of crosslinked polymer fine particles and polyol resin, respectively, said crosslinked polymer fine particles consisting of at least two different kinds of crosslinked polymer fine particles and a difference (x) between maximum and minimum hydroxyl values in all the crosslinked polymer fine particles being in the range defined by the following inequality:

$$0 < x \leqq 120.$$

15. A coated article comprising a substrate, a base coat covering the surface of said substrate and a clear coat further laminated thereon, wherein said base coat is a high solids coating composition comprising 100 parts by weight of a mixture of resinous solid matter comprising 30~90% by weight of a polyol resin and 10~70% by weight of a curing agent capable to react with hydroxyl groups and characterised by comprising 1~100 parts by weight of crosslinked polymer fine particles of a 0.001~1.0 µm average particle diameter, the crosslinked polymer fine particles having only hydroxyl groups as a reactive functional group on the surface of the particles and having a difference in hydroxyl value between said crosslinked polymer fine particles and said polyol resin within the range defined by the following inequality:

$$0 \leqq | (OHV)r - (OHV)g | \leqq 160,$$

wherein (OHV)g and (OHV)r are hydroxyl values of crosslinked polymer fine particles and polyol resin, respectively, and said clear coat contains 1~60 parts by weight of said crosslinked polymer fine particles and has said difference within the range defined by the following inequality:

$$0 \leqq | (OHV)r - (OHV)g | \leqq 100$$

wherein (OHV)g and (OHV)r have the foregoing designation.

16. A coating process for coating a substrate with a coating composition, wherein said coating composition is a high solids coating composition comprising: 100 parts by weight of a resinous solid matter mixture comprising 30~90% by weight of a polyol resin and 10~70% by weight of a curing agent capable to react with hydroxyl groups; and characterised by comprising 1~100 parts by weight of crosslinked polymer fine particles of a 0.001~1.0 µm average particle diameter, the crosslinked polymer fine particles having only hydroxyl groups as a reactive functional group on the surface of the particles and having a difference in hydroxyl value between said crosslinked polymer fine particles and said polyol resin within the range defined by the following inequality:

$$0 \leqq | (OHV)r - (OHV)g | \leqq 160,$$

wherein (OXV)g and (OHV)r are hydroxyl values of crosslinked polymer fine particles and polyol resin, respectively, said crosslinked polymer fine particles consisting of at least two different kinds of crosslinked polymer fine particles and a difference (x) between maximum and minimum hydroxyl values in all the crosslinked polymer fine particles being within the range defined by the following inequality:

$0 < x \leqq 120.$

**17.** A coating process comprising the steps of: coating a substrate with, as a base coat, a high solids coating composition comprising: 100 parts by weight of a mixture of resinous solid matter comprising 30~90% by weight of a polyol resin and 10~70% by weight of a curing agent capable to react with hydroxyl groups; and characterised by comprising 1~100 parts by weight of crosslinked polymer fine particles of a 0.001~1.0 µm average particle diameter, the crosslinked polymer fine particles having only hydroxyl groups as a reactive functional group on the surface of the particles, and having a difference in hydroxyl value between said crosslinked polymer fine particles and said polyol resin within the range defined by the following inequality:

$0 \leqq |(OHV)r - (OHV)g| \leqq 160;$

wherein (OHV)g and (OHV)r are hydroxyl values of crosslinked polymer fine particles and polyol resin, respectively, then, coating thereon, as a clear coat, said high solids coating composition containing 1~60 parts by weight of the crosslinked polymer fine particles and having said difference within the range defined by the following inequality:

$0 \leqq |(OHV)r - (OHV)g| \leqq 100;$

wherein (OHV)g and (OHV)r have the foregoing designation, and baking said base coat and clear coat simultaneously.

## Patentansprüche

**1.** Überzugsmittel mit hohem Feststoffanteil, das 100 Gewichtsteile einer harzigen Feststoffmischung umfaßt, welche zu 30 - 90 Gewichts-% ein Polyolharz und zu 10 - 70 Gewichts-% ein zur Reaktion mit Hydroxylgruppen geeignetes Härtemittel umfaßt, dadurch gekennzeichnet, daß das Überzugsmittel 1 - 100 Gewichtsteile vernetzte Polymerfeinpartikel mit einem mittleren Partikeldurchmesser von 0,001 - 1,0 µm umfaßt, daß die vernetzten Polymerfeinpartikel nur Hydroxylgruppen als reaktive funktionelle Gruppen an der Oberfläche der Partikel aufweisen und daß eine Differenz in der Hydroxylzahl zwischen den vernetzten Polymerfeinpartikeln und dem Polyolharz in dem durch die folgende Ungleichung definierten Bereich liegt:

$0 \leqq |(OHZ)r - (OHZ)g| \leqq 160,$

wobei (OHZ)g und (OHZ)r die Hydroxylzahlen der vernetzten Polymerfeinpartikel bzw. des Polyolharzes sind.

**2.** Überzugsmittel nach Anspruch 1, zur Verwendung für einen klaren Überzug, dadurch gekennzeichnet, daß die Differenz in der Hydroxylzahl in dem durch die folgende Ungleichung definierten Bereich liegt:

$0 \leqq |(OHZ)r - (OHZ)g| \leqq 100,$

wobei (OHZ)g und (OHZ)r die Hydroxylzahlen der vernetzten Polymerfeinpartikel bzw. des Polyolharzes sind.

**3.** Überzugsmittel nach Anspruch 1, dadurch gekennzeichnet, daß die vernetzten Polymerfeinpartikel aus mindestens zwei verschiedenen Arten von vernetzten Polymerfeinpartikeln bestehen und daß eine Differenz (x) zwischen der größten und der kleinsten Hydroxylzahl von allen vernetzten Polymerfeinpartikeln in dem durch die folgende Ungleichung definierten Bereich liegt:

$0 < x \leqq 120.$

**4.** Überzugsmittel nach Anspruch 3, dadurch gekennzeichnet, daß die verschiedenen Arten der vernetzten Polymerfeinpartikel jeweils in einem Anteil von mindestens 10 Gewichts-% bezogen auf die gesamten vernetzten Polymerfeinpartikel enthalten sind und daR die Differenz (x) in dem durch die folgende Ungleichung definierten Bereich liegt:

$10 \leqq x \leqq 120.$

**5.** Überzugsmittel nach Anspruch 4, zur Verwendung für einen klaren Überzug, dadurch gekennzeichnet, daß die vernetzten Polymerfeinpartikel in einer Gesamtmenge von 1 - 60 Gewichtsteilen enthalten sind und daß die Differenz (x) in dem durch die folgende Ungleichung definierten Bereich liegt:

$10 \leqq x \leqq 60.$

**6.** Überzugsmittel nach Anspruch 1, dadurch gekennzeichnet, daß die vernetzten Polymerfeinpartikel durch das die nachstehenden Schritte umfassende Verfahren erhalten sind:

(1) Emulsionspolymerisieren oder Kern/Schale-Emulsionspolymerisieren der folgenden Komponenten:

(a) eines $\alpha,\beta$-ethylenisch ungesättigten, eine Hydroxylgruppe enthaltenden Monomers,

(b) eines polyfunktionellen, $\alpha,\beta$-ethylenisch ungesättigten Monomers und

(c) eines anderen $\alpha,\beta$-ethylenisch ungesättigten Monomers als die obigen (a) und (b),

unter Verwendung eines wasserlöslichen Polymerisationsinitiators in einem seifenfreien System oder in der Gegenwart eines eine Estergruppe enthaltenden, oberflächenaktiven Mittels; Hinzufügen eines organischen Lösungsmittels zu einer resultierenden wässrigen Polymerdispersion und anschließendes Hinzufügen einer basischen Katalysatorverbindung oder einer sauren Katalysatorverbindung, um das Estergruppen enthaltende, oberflächenaktive Mittel und den wasserlöslichen Polymerisationsinitiator bei einer 95 °C nicht überschreitenden Temperatur im Suspensionszustand vollständig zu hydrolysieren; (2) Hinzufügen einer sauren oder einer basischen Verbindung zu der Suspension, um die basische Katalysatorverbindung oder die saure Katalysatorverbindung zu neutralisieren; dann nach Hinzufügen eines dispersionsstabilisierenden Harzes zusätzliches Hinzufügen eines Aminsalzes einer organischen Säure, gefolgt von Stehenlassen eines Systems dieser Suspension, damit es sich in zwei Schichten, eine organische Schicht und eine Wasserschicht, aufspaltet; nach Entfernen der Wasserschicht Waschen der organischen Schicht durch Hinzufügen von Wasser; Hinzufügen eines Aminsalzes einer organischen Säure, gefolgt von Stehenlassen, um Aufzuspalten, und Entfernen der Wasserschicht und

(3) Entfernen des Restwassers aus der organischen Schicht.

**7.** Überzugsmittel mit hohem Feststoffanteil nach Anspruch 6, dadurch gekennzeichnet, daß die vernetzten Polymerfeinpartikel durch Emulsionspolymerisation in Schritt (1) erhalten sind und eine Hydroxylzahl aufweisen, die einer Hydroxylzahl des gesamten Bereichs der Partikel entspricht.

**8.** Überzugsmittel mit hohem Feststoffanteil nach Anspruch 6, dadurch gekennzeichnet, daß die vernetzten Polymerfeinpartikel durch Kern/Schale-Emulsionspolymerisation in Schritt (1) erhalten sind und eine Hydroxylzahl aufweisen, die einer Hydroxylzahl des Schalenbereichs der Partikel entspricht.

**9.** Überzugsmittel mit hohem Feststoffanteil nach Anspruch 1, dadurch gekennzeichnet, daß das Polyolharz ein Acrylharz mit den Charakteristika eines mittleren Molekulargewichts zwischen 3.000 und 40.000, einer Hydroxylzahl zwischen 30 und 250, einer 30 nicht überschreitenden Säurezahl und einer Glasübergangstemperatur zwischen -60 und 50 °C umfaßt.

**10.** Überzugsmittel mit hohem Feststoffanteil nach Anspruch 9, zur Verwendung für einen klaren Überzug, dadurch gekennzeichnet, daß das mittlere Molekulargewicht zwischen 3.000 und 15.000, die Hydroxylzahl zwischen 50 und 250 und die Glasübergangstemperatur zwischen 20 und 50 °C liegt.

**11.** Überzugsmittel mit hohem Feststoffanteil nach Anspruch 9, zur Verwendung für einen klaren Überzug, dadurch gekennzeichnet, daß das mittlere Molekulargewicht zwischen 4.000 und 40.000, die Hydroxylzahl zwischen 30 und 200 und die Glasübergangstemperatur zwischen -20 und 19 °C liegt.

**12.** Überzugsmittel mit hohem Feststoffanteil nach Anspruch 9, zur Verwendung für einen Grundüberzug, dadurch gekennzeichnet, daß das mittlere Molekulargewicht zwischen 3.000 und 15.000, die Hydroxylzahl zwischen 50 und 250 und die Glasübergangstemperatur zwischen -10 und 20 °C liegt.

**13.** Überzugsmittel mit hohem Feststoffanteil nach Anspruch 9, zur Verwendung für einen Grundüberzug, dadurch gekennzeichnet, daß das mittlere Molekulargewicht zwischen 4.000 und 40.000, die Hydroxylzahl zwischen 30 und 200 und die Glasübergangstemperatur zwischen -60 und - 11 °C liegt.

**14.** Beschichteter Gegenstand mit einem Substrat und einem Überzugsfilm aus einem darauf aufgetragenen Überzugsmittel, wobei das Überzugsmittel 100 Gewichtsteile einer harzigen Feststoffmischung umfaßt, welche zu 30 - 90 Gewichts-% ein Polyolharz und zu 10 - 70 Gewichts-% ein zur Reaktion mit Hydroxylgruppen geeignetes Härtemittel umfaßt, dadurch gekennzeichnet, daß das Überzugsmittel 1 - 100 Gewichtsteile vernetzter Polymerfeinpartikel mit einem mittleren Partikeldurchmesser von 0,001 - 1,0 µm umfaßt, daß die vernetzten Polymerfeinpartikel nur Hydroxylgruppen als reaktive funktionelle Gruppen an der Oberfläche der Partikel aufweisen, daß das Überzugsmittel eine Differenz in der Hydroxylzahl zwischen den vernetzten Polymerfeinpartikeln und dem Polyolharz in dem durch die folgende Ungleichung definierten Bereich aufweist:

$$0 \leqq |(OHZ)r - (OHZ)g| \leqq 160,$$

wobei (OHZ)g und (OHZ)r die Hydroxylzahlen der vernetzten Polymerfeinpartikel bzw. des Polyolharzes sind, daß die vernetzten Polymerfeinpartikel aus mindestens zwei verschiedenen Arten von vernetzten Polymerfeinpartikeln besteht und daß eine Differenz (x) zwischen der größten und der kleinsten Hydroxylzahl bei allen vernetzten Polymerfeinpartikeln in dem durch die folgende Ungleichung definierten Bereich liegt:

$$0 < x \leqq 120.$$

**15.** Beschichteter Gegenstand mit einem Substrat, einem die Oberfläche des Substrats abdeckenden Grundüberzug und einem darauf weiterhin aufgetragenen klaren Überzug, wobei der Grundüberzug ein Überzugsmittel mit hohem Feststoffanteil ist, das 100 Gewichtsteile einer Mischung harziger Feststoffe umfaßt, welche zu 30 - 90 Gewichts-% ein Polyolharz und zu 10 - 70 Gewichts-% ein zur Reaktion mit Hydroxylgruppen geeignetes Härtemittel umfaßt, dadurch gekennzeichnet, daß das Überzugsmittel 1 - 100 Gewichtsteile vernetzte Polymerfeinpartikel mit einem mittleren Partikeldurchmesser von 0,001 bis 1,0 µm umfaßt, daß die vernetzten Polymerfeinpartikel nur Hydroxylgruppen als reaktive funktionelle Gruppen an der Oberfläche der Partikel aufweisen, daß das Überzugsmittel eine Differenz in der Hydroxylzahl zwischen den vernetzten Polymerfeinpartikeln und dem Polyolharz in dem durch die folgende Ungleichung definierten Bereich aufweist:

$$0 \leqq |(OHZ)r - (OHZ)g| \leqq 160,$$

wobei (OHZ)g und (OHZ)r die Hydroxylzahlen der vernetzten Polymerfeinpartikel bzw. des Polyolharzes sind, und daß der klare Überzug 1 - 60 Gewichtsteile der vernetzten Polymerfeinpartikel enthält und die Differenz in dem durch die folgende Ungleichung definierten Bereich aufweist:

$$0 \leqq |(OHZ)r - (OHZ)g| \leqq 100,$$

wobei (OHZ)g und (OHZ)r die vorherige Bedeutung haben.

**16.** Überzugsverfahren zum Beschichten eines Substrats mit einem Überzugsmittel, wobei das Überzugsmittel ein Überzugsmittel mit hohem Feststoffanteil ist, das 100 Gewichtsteile einer harzigen Feststoffmischung umfaßt, welche zu 30 - 90 Gewichts-% ein Polyolharz und zu 10 - 70 Gewichts-% ein zur Reaktion mit Hydroxylgruppen geeignetes Härtemittel umfaßt, dadurch gekennzeichnet, daß das Überzugsmittel 1 - 100 Gewichtsteile vernetzter Polymerfeinpartikel mit einem mittleren Partikeldurchmesser von 0,001 - 1,0 µm umfaßt, daß die vernetzten Polymerfeinpartikel nur Hydroxylgruppen als reaktive funktionelle Gruppen an der Oberfläche der Partikel aufweisen, daß das Überzugsmittel eine Differenz in der Hydroxylzahl zwischen den vernetzten Polymerfeinpartikeln und dem Polyolharz in dem durch die folgende Ungleichung definierten Bereich aufweist:

$0 \leqq |(OHZ)r - (OHZ)g| \leqq 160$,

wobei (OHZ)g und (OHZ)r die Hydroxylzahlen der vernetzten Polymerfeinpartikel bzw. des Polyolharzes sind, daß die vernetzten Polymerfeinpartikel aus mindestens zwei verschiedenen Arten von vernetzten Polymerfeinpartikeln bestehen und daß eine Differenz (x) zwischen der größten und der kleinsten Hydroxylzahl von allen vernetzten Polymerfeinpartikeln in dem durch die folgende Ungleichung definierten Bereich liegt:

$0 < x \leqq 120$.

**17.** Überzugsverfahren mit dem Schritt Beschichten eines Substrats mit einem Überzugsmittel mit hohem Feststoffanteil als Grundüberzug, das 100 Gewichtsteile einer Mischung harziger Feststoffe umfaßt, welche zu 30 - 90 Gewichts-% ein Polyolharz und zu 10 - 70 Gewichts-% ein zur Reaktion mit Hydroxylgruppen geeignetes Härtemittel umfaßt, dadurch gekennzeichnet, daß das Überzugsmittel 1 - 100 Gewichtsteile vernetzte Polymerfeinpartikel mit einem mittleren Partikeldurchmesser von 0,001 - 1,0 µm umfaßt, daß die vernetzten Polymerfeinpartikel nur Hydroxylgruppen als reaktive funktionelle Gruppen an der Oberfläche der Partikel aufweisen, daß das Überzugsmittel eine Differenz in der Hydroxylzahl zwischen den vernetzten Polymerfeinpartikeln und dem Polyolharz in dem durch die folgende Ungleichung definierten Bereich aufweist:

$0 \leqq |(OHZ)r - (OHZ)g| \leqq 160$,

wobei (OHZ)g und (OHZ)r die Hydroxylzahlen der vernetzten Polymerfeinpartikel bzw. des Polyolharzes sind, daß anschließend das Überzugsmittel mit hohem Feststoffanteil als klarer Überzug darauf aufgetragen wird, wobei es 1 - 60 Gewichtsteile der vernetzten Polymerfeinpartikel enthält und die Differenz in dem durch die folgende Ungleichung definierten Bereich aufweist:

$0 \leqq |(OHZ)r - (OHZ)g| \leqq 100$,

wobei (OHZ)g und (OHZ)r die vorherige Bedeutung haben, und daß der Grundüberzug und der klare Überzug gleichzeitig eingebrannt werden.

## Revendications

**1.** Composition de revêtement à teneur élevée en solides, comprenant : 100 parties en poids d'un mélange de matières solides résineuses comprenant 30 à 90% en poids d'une résine polyol et 10 à 70% en poids d'un agent de prise susceptible de réagir avec des groupes hydroxyle, caractérisée en ce qu'elle comprend 1 à 100 parties en poids de fines particules de polymères réticulés d'un diamètre moyen de particules de 0,001 à 1,0 µm, les fines particules de polymères réticulés ayant seulement des groupes hydroxyle en tant que groupe fonctionnel réactif sur la surface des particules, composition dans laquelle une différence de l'indice d'hydroxyle entre ces fines particules de polymères réticulés et cette résine polyol est dans la plage définie par l'inégalité suivante :

$0 \leqq |(OHV)r - (OHV)g| \leqq 160$,

inégalité dans laquelle (OHV)g et (OHV)r sont les indices d'hydroxyle des fines particules de polymères réticulés et de la résine polyol respectivement.

**2.** Composition de revêtement selon la revendication 1, destinée à être utilisée pour une couche transparente, dans laquelle la différence de l'indice d'hydroxyle est dans la plage définie par l'inégalité suivante :

$0 \leqq |(OHV)r - (OHV)g)| \leqq 100$,

inégalité dans laquelle (OHV)g et (OHV)r sont les indices d'hydroxyle des fines particules de polymères réticulés et de la résine polyol respectivement.

**3.** Composition de revêtement selon la revendication 1, dans laquelle les fines particules de polymères réticulés sont constituées par au moins deux types différents de fines particules de polymères réticulés et dans laquelle une différence (x) entre les indices d'hydroxyle, maximal et minimal, de toutes les fines particules de polymères réticulés est à l'intérieur de la plage définie par l'inégalité suivante :

$0 < x \leqq 120$

**4.** Composition de revêtement selon la revendication 3, dans laquelle les différents types de fines particules de polymères réticulés sont contenus chacun en une quantité d'au moins 10% en poids sur la base du poids total des fines particules de polymères réticulés et dans laquelle la différence (x) est à l'intérieur de la plage définie par l'inégalité suivante :

$10 \leqq x \leqq 120$

**5.** Composition de revêtement selon la revendication 4 destinée à être utilisée pour une couche transparente, dans laquelle les fines particules de polymères réticulés sont contenues en une quantité totale de 1 à 60 parties en poids et la différence (x) est à l'intérieur de la plage définie par l'inégalité suivante :

$10 \leqq x \leqq 60$

**6.** Composition de revêtement selon la revendication 1, dans laquelle les fines particules de polymères réticulés sont obtenues par le procédé comprenant les étapes suivantes :

(1) polymériser en émulsion ou polymériser en une émulsion du type noyau/coque les composants suivants :

(a) un monomère à doubles liaisons $\alpha,\beta$-éthyléniques contenant un groupe hydroxyle;

(b) un monomère à doubles liaisons $\alpha,\beta$-éthyléniques polyfonctionnel; et

(c) un monomère à doubles liaisons $\alpha,\beta$-éthyléniques autre que le monomère (a) ou (b) ci-dessus, en utilisant un initiateur de polymérisation soluble dans l'eau, dans un système sans savon ou en la présence d'un agent tensio-actif de surface contenant un groupe ester, en ajoutant un solvant organique à une dispersion aqueuse de polymères résultante; et en ajoutant ensuite un compose basique ou un composé acide en tant que catalyseur pour hydrolyser complètement cet agent tensio-actif de surface contenant le groupe ester et l'initiateur de polymérisation soluble dans l'eau à une température ne dépassant pas 95 °C comme en l'état de suspension;

(2) ajouter un composé acide ou un composé basique à cette suspension pour neutraliser le composé basique ou le compose acide servant de catalyseur; ensuite, après addition d'une résine de stabilisation de la dispersion, ajouter en outre un sel aminé d'un acide organique, après quoi on laisse ce système de suspension se reposer pour se séparer en deux couches, une couche organique et une couche aqueuse; après enlèvement de la couche aqueuse, laver la couche organique en ajoutant de l'eau; ajouter un sel aminé d'un acide organique, après quoi on laisse reposer à des fins de séparation; et enlever la couche aqueuse; et

(3) enlever l'eau résiduelle dans la couche organique.

**7.** Composition de revêtement à teneur élevée en solides selon la revendication 6, dans laquelle les fines particules de polymères réticulés sont obtenues par la polymérisation en émulsion à l'étape (1) et ont un indice d'hydroxyle représentant un indice d'hydroxyle de la totalité de la portion des particules.

**8.** Composition de revêtement a teneur élevée en solides selon la revendication 6, dans laquelle les fines particules de polymères réticulés sont obtenues par la polymérisation en émulsion du type noyau/coque dans l'étape (1) et ont un indice d'hydroxyle représentant un indice d'hydroxyle de la portion coque des particules.

**9.** Composition de revêtement à teneur élevée en solides selon la revendication 1, dans laquelle la résine polyol comprend une résine acrylique ayant un poids moléculaire moyen en poids compris entre 3000 et 40 000, un indice d'hydroxyle compris entre 30 et 250, un indice d'acide ne dépassant pas 30 et une température de transition vitreuse comprise entre -60 et +50 °C.

**10.** Composition de revêtement à teneur élevée en solides selon la revendication 9, destinée à être utilisée pour une couche transparente, dans laquelle le poids moléculaire moyen en poids est compris entre 3000 et 15 000, l'indice d'hydroxyle est compris entre 50 et 250 et la température de transition vitreuse est comprise entre 20 et 50 °C.

**11.** Composition de revêtement a teneur élevée en solides selon la revendication 9, destinée à être utilisée pour une couche transparente, dans laquelle le poids moléculaire moyen en poids est compris entre 4000 et 40 000, l'indice d'hydroxyle est compris entre 30 et 200, et la température de transition vitreuse est comprise entre -20 et +19 °C.

**12.** Composition de revêtement à teneur élevée en solides selon la revendication 9, destinée à être utilisée pour une couche de base, dans laquelle le poids moléculaire moyen en poids est compris entre 3000 et 15 000, l'indice d'hydroxyle est compris entre 50 et 250, et la température de transition vitreuse est comprise entre -10 et +20 °C.

**13.** Composition de revêtement à teneur élevée en solides selon la revendication 9, destinée à être utilisée pour une couche de base, dans laquelle le poids moléculaire moyen en poids est compris entre 4000 et 40 000, l'indice d'hydroxyle est comprise entre 30 et 200, et la température de transition vitreuse est comprise entre -60 et -11 °C.

**14.** Article revêtu comprenant un substrat et un film de revêtement d'une composition de revêtement appliquée sur le substrat, dans lequel cette composition de revêtement comprend : 100 parties en poids d'un mélange de matières solides résineuses comprenant 30 à 90% en poids d'une résine polyol et 10 à 70% en poids d'un agent de prise susceptible de réagir avec des groupes hydroxyle; caractérisé en ce que cette composition comprend 1 à 100 parties en poids de fines particules de polymères réticulés ayant un diamètre de particules moyen de 0,001 à 1,0 µm, les fines particules de polymères réticulés ayant seulement des groupes hydroxyle comme groupe fonctionnel réactif sur la surface des particules, cette composition de revêtement ayant une différence dans l'indice d'hydroxyle entre les fines particules de polymères réticulés et la résine polyol à l'intérieur de la plage définie par l'inégalité suivante :

$$0 \leqq |(OHV)r - (OHV)g| \leqq 160,$$

dans laquelle (OHV)g et (OHV)r sont les indices d'hydroxyle des fines particules de polymères réticulés et de la résine polyol respectivement, ces fines particules de polymères réticulés comprenant au moins deux types différents de fines particules de polymères réticulés avec une différence (x) entre les indices d'hydroxyle, maximal et minimal, de toutes les fines particules de polymères réticulés étant à l'intérieur de la plage définie par l'inégalité suivante :

$$0 \leqq x \leqq 120$$

**15.** Article revêtu comprenant un substrat, une couche de base recouvrant la surface de ce substrat et une couche transparente appliquée ensuite sur elle, dans lequel la couche de base est une composition de revêtement à teneur élevée en solides comprenant 100 parties en poids d'un mélange de matières solides résineuses comprenant 30 à 90% en poids d'une résine polyol et 10 à 70% en poids d'un agent de prise susceptible de réagir avec des groupes hydroxyle, caractérisé en ce que la composition comprend 1 à 100 parties en poids de fines particules de polymères réticulés ayant une dimension de particules moyenne de 0,001 à 1,0 µm, ces fines particules de polymères réticulés ayant seulement des groupes hydroxyle en tant que groupe fonctionnel réactif sur la surface des particules, et ayant une différence dans l'indice d'hydroxyle entre les fines particules de polymères réticulés et la résine polyol à l'intérieur de la plage définie par l'inégalité suivante :

$$0 \leqq |(OHV)r - (OHV)g| \leqq 160,$$

inégalité dans laquelle (OHV)g et (OHV)r sont les indices d'hydroxyle des fines particules de polymères réticulés et de la résine polyol respectivement, et dans laquelle la couche transparente contient 1 à 60 parties en poids des fines particules de polymères réticulés et a cette différence à l'intérieur de la plage définie par l'inégalité suivante :

$0 \leqq |(OHV)r - (OHV)g| \leqq 100$,

inégalité dans laquelle (OHV)g et (OHV)r ont la signification précédente.

**16.** Procédé de revêtement pour revêtir un substrat avec une composition de revêtement, dans lequel la composition de revêtement est une composition de revêtement à teneur élevée en solides, comprenant 100 parties en poids d'un mélange de matières solides résineuses comprenant 30 à 90% en poids d'une résine polyol et 10 à 70% en poids d'un agent de prise susceptible de réagir avec des groupes hydroxyle, caractérisé en ce que la composition comprend 1 à 100 parties en poids de fines particules de polymères réticulés ayant un diamètre moyen de particules de 0,001 à 1,0 µm, les fines particules de polymères réticulés ayant seulement des groupes hydroxyle en tant que groupe fonctionnel réactif sur la surface des particules, et ayant une différence dans l'indice d'hydroxyle entre les fines particules de polymères réticulés et la résine polyol se trouvant à l'intérieur de la plage définie par l'inégalité suivante :

$0 \leqq |(OHV)r - (OHV)g| \leqq 160$,

dans laquelle (OHV)g et (OHV)r sont les indices d'hydroxyle des fines particules de polymères réticulés et de la résine polyol respectivement, ces fines particules de polymères réticulés étant constituées d'au moins deux types différents de fines particules de polymères réticulés, la différence (x) entre les indices d'hydroxyle, maximal et minimal, de toutes les fines particules de polymères réticulés se trouvant à l'intérieur de la plage définie par l'inégalité suivante :

$0 < x \leqq 120$

**17.** Procédé de revêtement comprenant les étapes suivantes : revêtir un substrat avec, comme couche de base, une composition de revêtement à teneur élevée en solides comprenant : 100 parties en poids d'un mélange de matières solides résineuses comprenant 30 à 90% en poids d'une résine polyol et 10 à 70% en poids d'un agent de prise susceptible de réagir avec des groupes hydroxyle, cette composition étant caractérisée en ce qu'elle comprend 1 à 100 parties en poids de fines particules de polymères réticulés ayant un diamètre de particule moyen de 0,001 à 1,0 µm, les fines particules de polymères réticulés ayant seulement des groupes hydroxyle comme groupe fonctionnel réactif sur la surface des particules, et ayant une différence dans l'indice d'hydroxyle entre les fines particules de polymères réticulés et la résine polyol à l'intérieur de la plage définie par l'inégalité suivante :

$0 \leqq |(OHV)r - (OHV)g| \leqq 160$,

inégalité dans laquelle (OHV)g et (OHV)r sont les indices d'hydroxyle des fines particules de polymères réticulés et de résine polyol respectivement, ensuite, appliquer sur elle, en tant que couche transparente, ladite composition de revêtement à teneur élevée en solides contenant 1 à 60 parties en poids de fines particules de polymères réticulés et ayant ladite différence à l'intérieur de la plage définie par l'inégalité suivante :

$0 \leqq |(OHV)r - (OHV)g| \leqq 100$,

dans laquelle (OHV)g et (OHV)r ont les désignations précédentes, et cuire simultanément la couche de base et la couche transparente.